# FASCICULE DE BREVET EUROPEEN

(11) **EP 2 222 688 B1**
(45) Date de publication et mention de la délivrance du brevet: **21.08.2013**
(21) Numéro de dépôt: 08872749.0
(22) Date de dépôt: 18.12.2008
(51) Int. Cl.: C07F 7/10, C07F 7/18, C08L 83/04, C08K 5/5465, C08J 3/24, C08G 77/08

(54) **COMPOSES A STRUCTURE GUANIDINE ET LEURS UTILISATIONS COMME CATALYSEURS DE POLYCONDENSATION D'ORGANOPOLYSILOXANES**
VERBINDUNGEN MIT EINER GUANIDINSTRUKTUR UND IHRE VERWENDUNG ALS ORGANOPOLYSILOXAN-POLYKONDENSATIONSKATALYSATOREN
COMPOUNDS WITH A GUANIDINE STRUCTURE AND USE THEREOF FOR AS ORGANOPOLYSILOXANE POLYCONDENSATION CATALYSTS

(30) Priorité: 20.12.2007 FR 0708925
(43) Date de publication de la demande: 01.09.2010
(73) Titulaire: Bluestar Silicones France, 69486 Lyon Cedex 03 (FR)
(72) Inventeur: MALIVERNEY, Christian, F-69690 Saint Julien sur Bibost (FR); SAINT-JALMES, Laurent, F-69390 Vourles (FR)
(74) Mandataire: Mekki, Boualem
(86) Numéro de dépôt international: PCT/FR2008/001767
(87) Numéro de publication internationale: WO 2009/106717

(56) Documents cités:
- US-A- 4 248 993

## Description

L'invention concerne des composés à structure guanidine silylée, et leurs utilisations comme catalyseurs de la réaction de polycondensation d'organopolysiloxanes.

La présente invention concerne une composition organopolysiloxanique vulcanisable dès la température ambiante en élastomère réticulant par polycondensation et ne contenant pas de catalyseurs à base d'alkylétain qui présentent des problèmes de toxicité.

L'invention concerne aussi de nouveaux catalyseurs de polycondensation dans la chimie des silicones et leurs utilisations comme catalyseurs de la réaction de polycondensation d'organopolysiloxanes.

Les formulations des élastomères réticulant par polycondensation font généralement intervenir une huile silicone, généralement un polydiméthylsiloxane, à terminaisons hydroxylées, éventuellement pré-fonctionnalisées par un silane de façon à présenter des extrémités alcoxy, un réticulant, un catalyseur de polycondensation, classiquement un sel d'étain ou un titanate d'alkyle, une charge de renfort et d'éventuels autres additifs comme des charges de bourrage, des promoteurs d'adhérence, des colorants, des agents biocides, etc.

Ces compositions organopolysiloxaniques vulcanisables dès la température ambiante sont bien connues et sont classées en 2 groupes distincts: les compositions monocomposantes (RTV-1) et les compositions bicomposantes (RTV-2).

Lors de la réticulation, l'eau (soit apportée par une humidité atmosphérique dans le cas des RTV-1, soit introduite dans une partie de la composition dans le cas des RTV-2) permet la réaction de polycondensation, qui conduit à la formation du réseau élastomérique.

Généralement, les compositions monocomposantes (RTV-1) réticulent quand elles sont exposées à l'humidité de l'air, c'est-à-dire qu'elles ne peuvent réticuler dans un milieu en confiné. Par exemple, les compositions silicones monocomposantes utilisées comme mastics ou adhésifs réticulent à froid suivant un mécanisme d'hydrolyse de fonctions réactives du type acétoxysilane, cétiminoxysilane, alcoxysilane..., suivi par des réactions de condensation entre des groupements silanols formés et d'autres fonctions réactives résiduelles. L'hydrolyse est généralement effectuée grâce à la vapeur d'eau qui diffuse dans le matériau à partir de la surface exposée à l'atmosphère. Généralement, la cinétique des réactions de polycondensation est extrêmement lente; ces réactions sont donc catalysées par un catalyseur approprié. Comme catalyseurs qui sont utilisés, on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité.

Quand aux compositions bicomposantes, elles sont commercialisées et stockées sous la forme de deux composantes, une première composante contenant les matériaux polymériques de base et la deuxième composante contenant le catalyseur. Les deux composantes sont mélangées lors de l'emploi et le mélange réticule sous la forme d'un élastomère relativement dur. Ces compositions à deux composantes sont bien connues et sont notamment décrites dans l'ouvrage de Walter Noll "Chemistry and Technology of Silicones" 1968, 2ème édition aux pages 395 à 398. Ces compositions comportent essentiellement 4 ingrédients différents:
- un polymère réactif α,ω-dihydroxydiorganopolysiloxane,
- un agent de réticulation, généralement un silicate ou un polysilicate,
- un catalyseur à l'étain, et
- de l'eau.

Le plus souvent, le catalyseur de condensation est à base d'un composé organique d'étain. En effet, de nombreux catalyseurs à base d'étain ont déjà été proposés comme catalyseur de réticulation de ces RTV-2. Les composés les plus utilisés sont les carboxylates d'alkylétain tels que le monooléate de tributyltain ou les dicarboxylates de dialkylétain tels que le dilaurate de dibutylétain, le diacétate de dibutylétain ou le dilaurate de diméthylétain (voir l'ouvrage de Noll "Chemistry and Technology of silicones" page 337, Academic Press, 1968 - 2ème édition ou les brevets EP 147 323 ou EP 235 049).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Les catalyseurs à base de titane, également très employés dans les RTV-1, présentent cependant un inconvénient majeur: ils ont une cinétique plus lente que les catalyseurs à base d'étain. De plus, ces catalyseurs ne sont pas utilisables dans les RTV-2 du fait de problèmes de gélification.

D'autres catalyseurs sont parfois mentionnés comme les catalyseurs à base de zinc, de zirconium ou d'aluminium, mais ils n'ont connus qu'un faible développement industriel en raison de leur médiocre efficacité.

Ainsi, il a été mis au point des catalyseurs de la réaction de polycondensation de silicone, à structure guanidine, tels que la tétraméthylguanidine, décrite dans le brevet US 3,719,633.

D'autres catalyseurs à structure guanidine silylée ont ensuite été développés et sont décrits par exemple dans les brevets US 4,180,462 et US 4,248, 993.

Par ailleurs, on connaît également des composés à structure guanidine silylée, tels que la tétraméthyl-3-triméthoxysilylpropylguanidine décrite dans le brevet US 4,248,992. Un tel composé est utilisé comme agent antibactérien.

Par ailleurs, on connaît également des catalyseurs de la réaction de Knoevenagel (KIM K.S., SONG J.H., KIM J.H., SEO G., Studies in Surface Science and Catalysis, 2003, 146, 505) de formule: 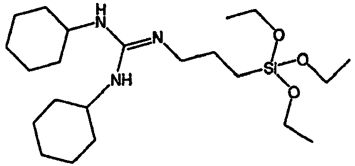 et

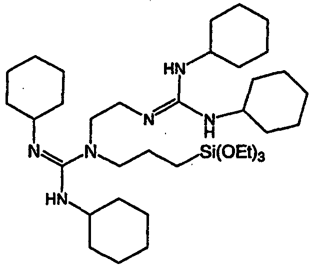

L'objectif essentiel de la présente invention est donc de trouver un nouveau catalyseur non toxique permettant aussi bien, à l'humidité de l'air, une réticulation en surface mais aussi une réticulation à coeur la plus complète possible.

Un autre objectif essentiel de la présente invention est de proposer un système catalytique utilisable à la fois dans la réticulation des compositions élastomères mono- et bi-composantes.

Un autre objectif essentiel de la présente invention est de proposer un système catalytique non toxique mais qui continue à répondre à la fois aux contraintes de conservation, de mise en oeuvre et de réticulation des deux types de compositions élastomères mono- et bi-composantes.

Ces objectifs, parmi d'autres, sont atteints par la présente invention qui concerne tout d'abord des nouveaux composés répondant à la formule générale **(I)**: 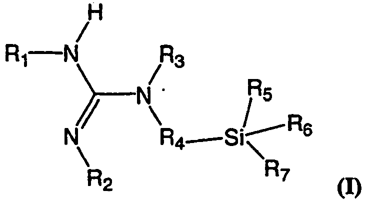 dans laquelle,
- R₁ et R₂, identiques ou différents, représentent, indépendamment l'un de l'autre, un groupe alkyle monovalent linéaire ou ramifié, un groupe cycloalkyle, un groupe (cycloalkyl)alkyle, le cycle étant substitué ou non et pouvant comprendre au moins un hétéroatome, un groupe arylalkyle, fluoroalkyle, aryle substitué ou non, R₁₁R₁₂R₁₃Si, où R₁₁, R₁₂, et R₁₃ sont des groupes alkyles monovalents linéaires ou ramifiés,
- R₃ représente un atome d'hydrogène, un groupe alkyle monovalent linéaire ou ramifié, un groupe cycloalkyle, un groupe alkyle substitué par un cycle, substitué ou non et pouvant comprendre au moins un hétéroatome , un groupe arylalkyle, fluoroalkyle, alkylamine, alkylguanidine, aryle substitué ou non, un alkylalcoxysilane,
- R₄ représente une chaîne alkyle linéaire ou ramifiée contenant 1 à 50 atomes, de préférence de 1 à 20 atomes, certains pouvant être des hétéroatomes choisis parmi O, S et N,
- R₅, R₆ et R₇, identiques ou différents, représentent, indépendamment l'un de l'autre, un groupe alkyle linéaire ou ramifié, un groupe aromatique, un groupe alcoxy, ou un groupe trialkylsilyloxy de formule **(I')** suivante: 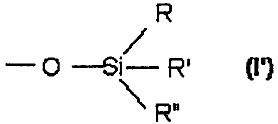
- R, R' et R", identiques ou différents, représentent, indépendamment l'un de l'autre, un groupe alkyle linéaire ou ramifié en C₁-C₁₂, ou un groupe aromatique, et
à condition que:
- si R₃ est un atome d'hydrogène, alors R₁ et R₂ ne sont ni l'un ni l'autre un groupe hydrocarboné monovalent linéaire ;
- si R₁ et R₂ sont chacun un groupe cyclohexyle R₄ un groupe propylène linéaire et R₅ = R₆ = R₇ = OEt, alors R₃ n'est pas un atome d'hydrogène; et
- si R₁ et R₂ sont chacun un groupe cyclohexyle, R₄ un groupe propylène linéaire et R₅ = R₆ = R₇ = OEt, alors R₃ n'est pas le groupe

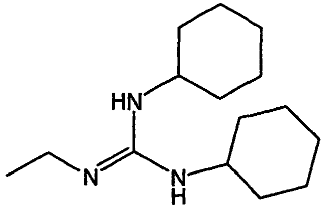

Si le motif tétraméthylguanidine est connu comme catalyseur de la réticulation des huiles polyorganosiloxaniques, que ce soit la 1,1,3,3-tétraméthylguanidine, utilisée plutôt sous forme de sels comme catalyseur de fonctionnalisation des huiles (brevet US 3,719,633 cité plus haut), ou sous forme alkylsilylée, principalement des 2-[3-(trialcoxysilyl)propyl]-1,1,3,3-tétraméthylguanidines utilisées comme catalyseurs en système monocomposant (brevets US 4,180,462 et US 4,248,993 cités plus haut), les composés de la présente invention sont nouveaux, particulièrement faciles à obtenir par le procédé revendiqué et plus rapides et performants comme catalyseurs de polycondensation des huiles polyorganosiloxaniques, aussi bien en systèmes monocomposants qu'en systèmes bicomposants.

D'autre part, les systèmes 1,1,3,3-tétraméthylguanidines silylées, majoritairement 2-(3-(triméthoxysilyl)propyl), de RN-CAS 69709-01-09 sont pentasubstitués, alors que les guanidines silylées revendiquées dans ce brevet sont tri ou tétrasubstituées.

Si une seule guanidine silylée trisubstituée est connue de la littérature, la 1,3-dicyclohexyl-2-(3-(triéthoxysilyl)propyl)guanidine, de RN-CAS 680575-62-6, ainsi qu'un analogue à double structure guanidine, tri et tétrasubstituée, la 1,3-dicyclohexyl-2-(3-(triéthoxysilyl)propyl)-2-(1,3-dicyclohexyl-2-éthylguanidinyl) guanidine de RN-CAS 680575-63-7, citées plus haut, celles-ci sont citées comme catalyseurs de la réaction de Knoenenagel, et donc leur utilisation est très lointaine de l'utilisation comme catalyseurs de la réaction de polycondensation des polyorganosiloxanes.

De préférence, R₁ et R₂ comprennent de 1 à 8 atomes de carbone.

Un groupe de composés préférés selon l'invention correspond aux composés pour lesquels R₁ et R₂ sont chacun un groupe isopropyle ou un groupe cyclohexyle.

R₁ et/ou R₂ peuvent être également un groupe de formule:

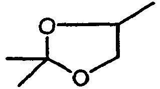

Un autre groupe de composés préférés selon l'invention correspond aux composés pour lesquels R₃ est un atome d'hydrogène, un groupe méthyle, un groupe éthyle, un groupe propyle, un groupe butyle, un groupe propyltrialcoxysilane, un groupe:
-(CH₂)₂NHC(NHiPr)(NiPr), ou
-(CH₂)₂NC(NHiPr)(NiPr)(CH₂)₂NHC(NHiPr)(NiPr).

Un autre groupe de composés préférés selon l'invention correspond aux composés pour lesquels R₅, R₆ et R₇, identiques ou différents, représentent, indépendamment l'un de l'autre, un groupe alkyle linéaire en C₁-C₄, de préférence méthyle, éthyle ou phényle, un groupe OR₈, où R₈ est un groupe alkyle en C₁-C₈ linéaire ou ramifié, de préférence, un groupe méthyle, éthyle, propyle, isopropyle, butyle ou triméthylsilyle.

Les composés selon l'invention sont choisis parmi les composés **(1)** à **(55)** suivants:

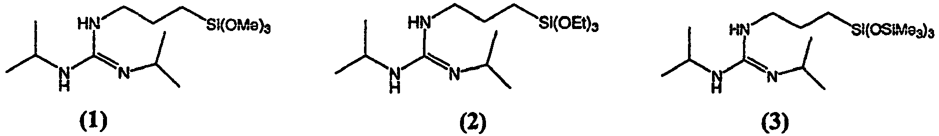

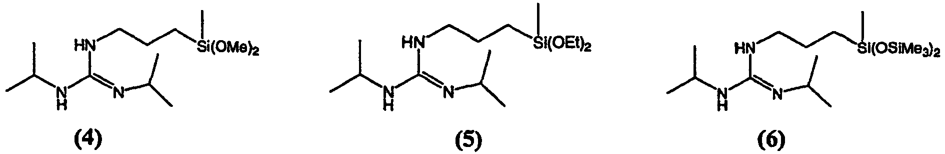

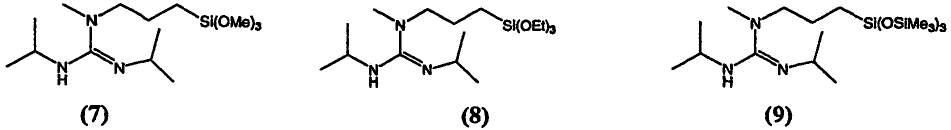

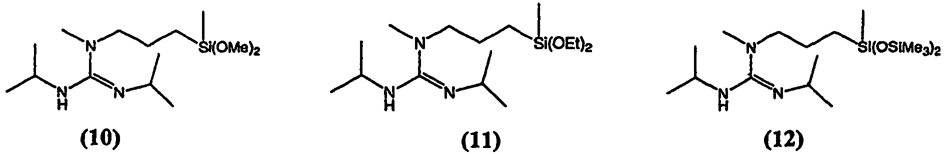

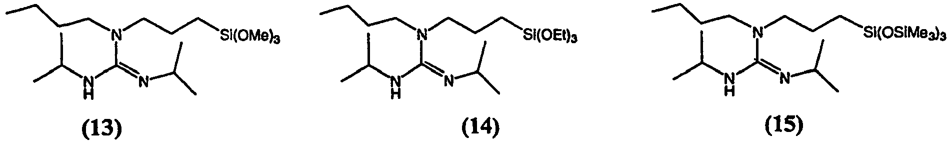

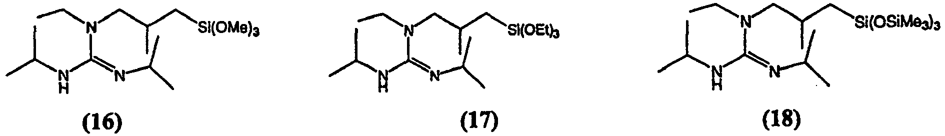

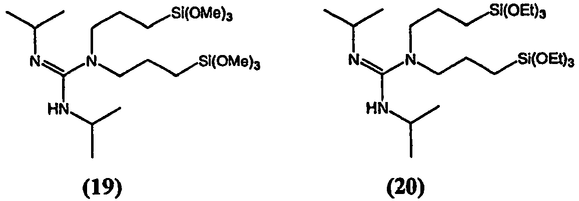

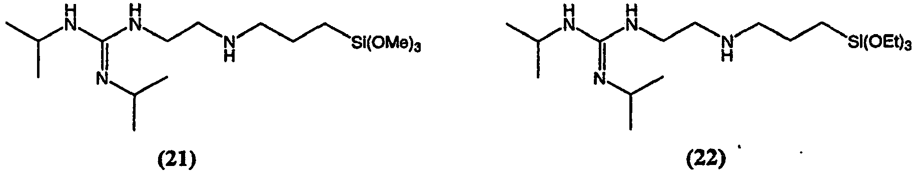

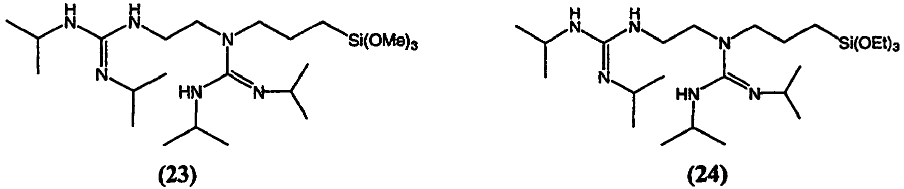

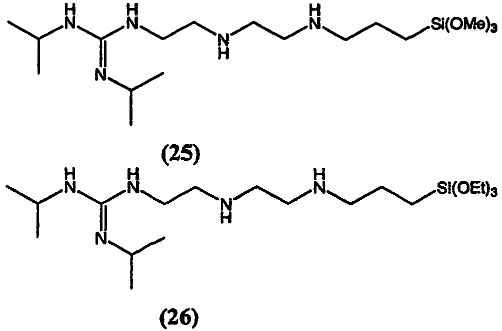

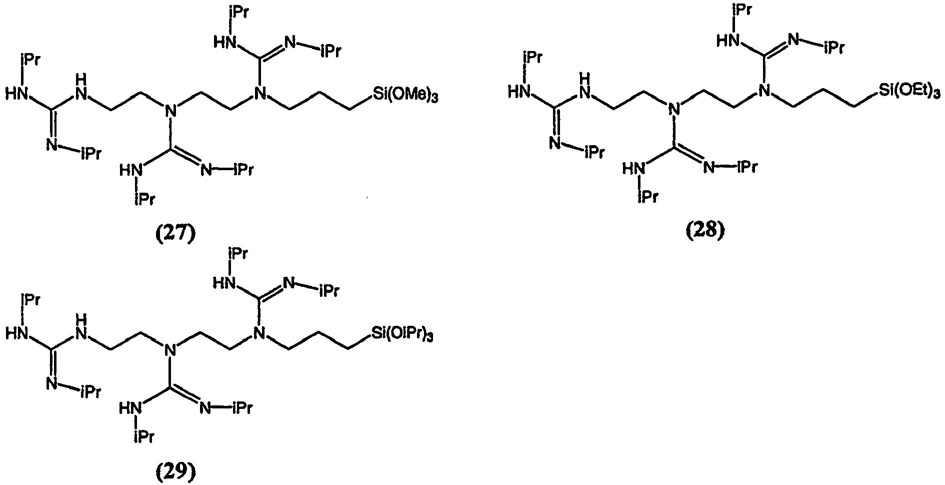

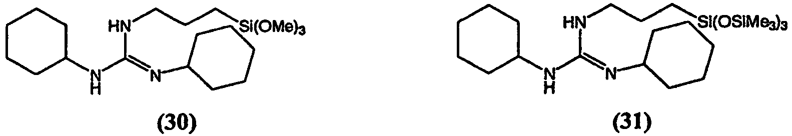

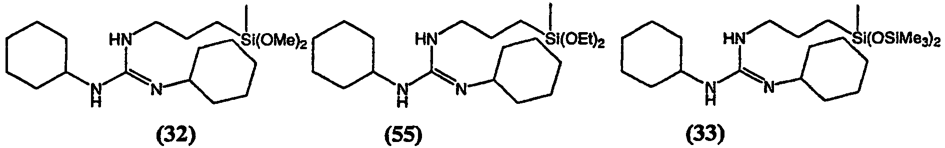

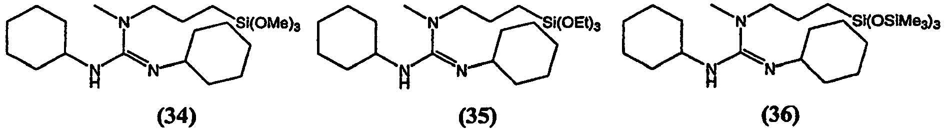

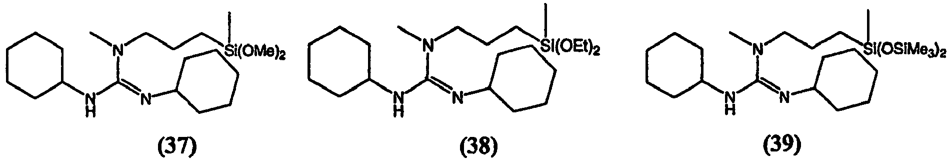

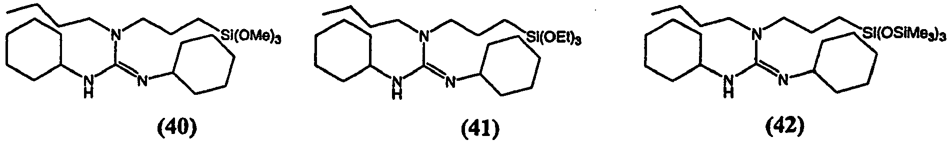

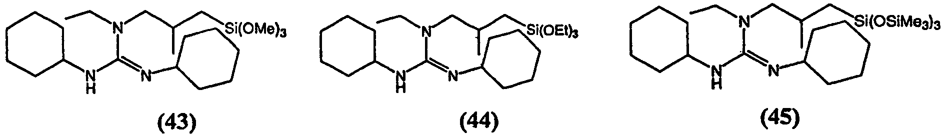

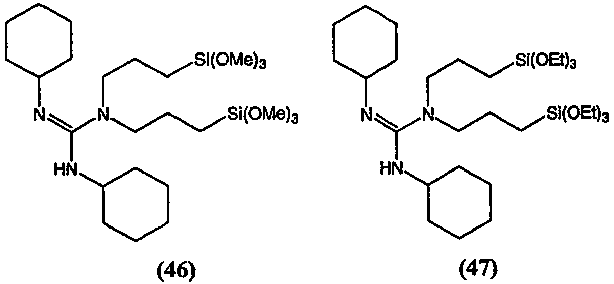

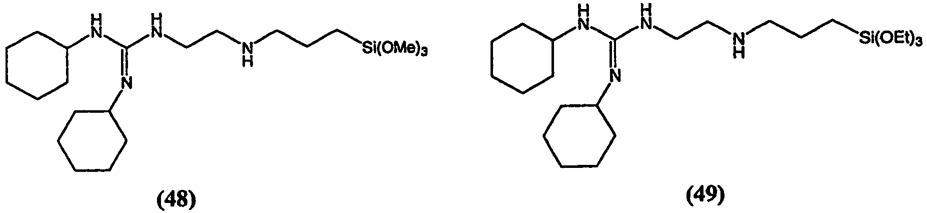

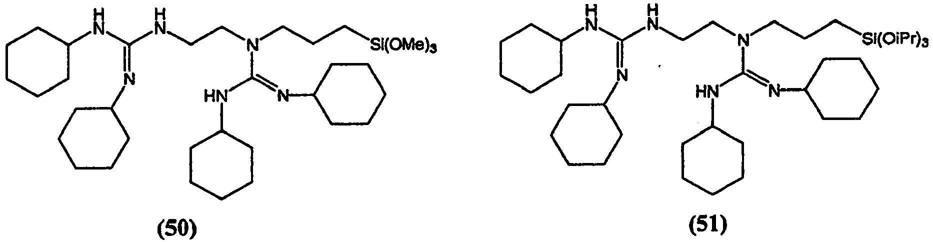

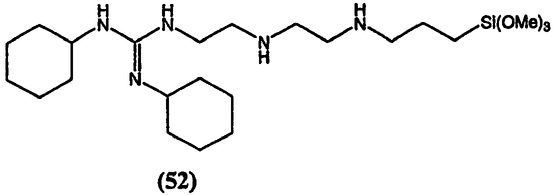

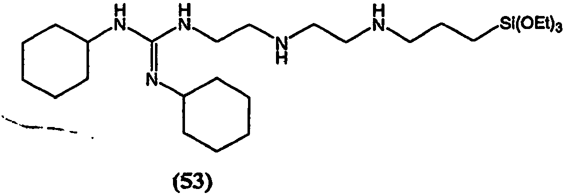

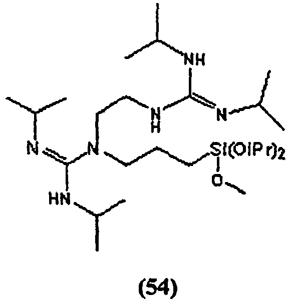

Les composés de formule **(I)** selon l'invention sont obtenus par exemple selon un procédé de préparation comprenant la réaction d'un carbodiimide de formule **(II)** 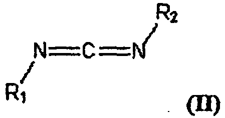 avec une amine primaire ou secondaire de formule (III) 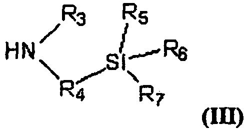 où R₁, R₂, R₃, R₄, R_{5,} R₆ et R₇ sont tels que définis ci-dessus

Les carbodiimides sont généralement obtenus à partir d'urées ou thiourées, elles-mêmes obtenues par exemple par réaction d'une amine primaire R1NH₂ et d'un isocyanate R2NCO. Les carbodiimides sont des produits connus en soi, disponibles dans le commerce.

L'amine primaire ou secondaire de formule **(III)**, utilisée dans la présente invention, comprend au moins un groupement silylé. De telles amines sont connues en soi et généralement utilisées dans le domaine des silicones comme promoteurs d'adhérence. Les amines pour lesquelles R₅ = R₆ = R₇ = OR₈, ou R₅ = Me et R₆ = R₇ = OR₈, ou R₅ = R₆ = Me et R₇ = OR₈, où Me est le groupe méthyle et R₈ est un groupe méthyle ou éthyle sont disponibles dans le commerce.

Le procédé selon l'invention a pour avantage de consister en une synthèse simple et peu coûteuse, à partir de produits usuels.

Selon le procédé selon l'invention, les deux produits, carbodiimide et amine silylée, sont chauffés en présence ou non d'un solvant.

Selon une variante, la réaction du carbodiimide de formule **(II)** avec l'amine de formule **(III)** est réalisée sans solvant. La réaction peut se faire à température ambiante, mais il est préférable de chauffer à une température suffisante dépendant de la substitution de l'amine **(III)**. Ainsi si R3=H il est souhaitable de ne pas dépasser la température de 100°C et si R3≠H le temps de réaction est d'autant plus court que la température est élevée. Ainsi la température sera comprise entre 20 et 150°C, préférentiellement entre 70 et 130°C.

Il est possible d'utiliser un excès de l'un ou l'autre des constituants : dans le cas d'un carbodiimide volatil en excès, cet excès sera éliminé en fin de réaction, en même temps que le solvant s'il y en a un, et si l'amine est en excès, celle-ci participera non seulement à la catalyse mais aussi comme promoteur d'adhérence. L'excès peut être de quelques pourcents jusqu'à plusieurs équivalents, préférentiellement entre 10% et 1 équivalent. Quand le composé en défaut est entièrement consommé, le solvant le cas échéant et éventuellement l'excès de l'autre composé sont évaporés, et le produit formé, le plus souvent un liquide peu visqueux, est utilisé tel quel comme catalyseur dans les réactions de polycondensation.

La présente invention concerne également les oligomères des composés décrits ci-dessus, obtenus par réaction des groupes liés au silicium, par exemple en présence d'humidité.

La présente invention concerne également un sel de guanidinium **(IV)** préparé en faisant réagir un composé selon l'invention et tel que défini ci- avec un acide et de préférence avec un acide carboxylique

La présente invention concerne également une composition organopolysiloxanique, caractérisée en ce qu'elle comprend d'une part une base silicone **B** apte à durcir par réaction de polycondensation en un élastomère silicone et d'autre part, une quantité catalytiquement efficace d'au moins un catalyseur de polycondensation qui est soit un sel de guanidinium **(IV)** selon l'invention et tel que défini ci-dessus, soit une guanidine de formule **(I)** suivante: 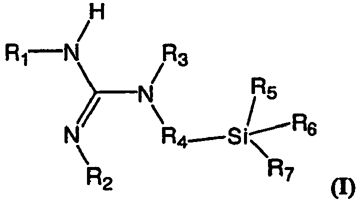 dans laquelle,
- R₁ et R₂, identiques ou différents, représentent, indépendamment l'un de l'autre, un groupe alkyle monovalent linéaire ou ramifié, un groupe cycloalkyle, un groupe (cycloalkyl)alkyle, le cycle étant substitué ou non et pouvant comprendre au moins un hétéroatome, un groupe arylalkyle, fluoroalkyle, aryle substitué ou non, R₁₁R₁₂R₁₃Si, où R₁₁, R₁₂, et R₁₃ sont des groupes alkyles monovalents linéaires ou ramifiés,
- R₃ représente un atome d'hydrogène, un groupe alkyle monovalent linéaire ou ramifié, un groupe cycloalkyle, un groupe alkyle substitué par un cycle, substitué ou non et pouvant comprendre au moins un hétéroatome, un groupe arylalkyle, fluoroalkyle, alkylamine, alkylguanidine, aryle substitué ou non, un alkylalcoxysilane,
- R₄ représente une chaîne alkyle linéaire ou ramifiée contenant 1 à 50 atomes, de préférence de 1 à 20 atomes, certains pouvant être des hétéroatomes choisis parmi O, S et N,
- R₅, R₆ et R₇, identiques ou différents, représentent, indépendamment l'un de l'autre, un groupe alkyle linéaire ou ramifié, un groupe aromatique, un groupe alcoxy ou un groupe trialkylsilyloxy de formule **(I')** suivante: 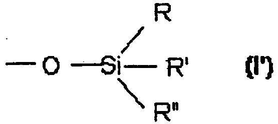
- R, R' et R", identiques ou différents, représentent, indépendamment l'un de l'autre, un groupe alkyle linéaire ou ramifié en C₁-C₁₂, ou un groupe aromatique,
à condition que si R₃ est un atome d'hydrogène, alors R₁ et R₂ ne sont ni l'un ni l'autre un groupe hydrocarboné monovalent linéaire.

Selon un mode préférentiel, le catalyseur de polycondensation de la composition selon l'invention est choisi parmi les composés **(1)** à **(55)** tels que définis ci-dessus.

La quantité de composé de formule **(I)** est comprise entre 0,1 et 10 % en poids de la masse totale, de préférence entre 0,5 et 5 %, que ce soit une préparation mono ou bicomposant.

Selon un autre de ses aspects, la présente invention a également pour objet un élastomère obtenu par réticulation et durcissement de la composition décrite ci-dessus.

L'invention concerne également l'utilisation comme catalyseur de la réaction de polycondensation d'organopolysiloxanes d'un sel de guanidinium **(IV)** selon l'invention et tel que défini ci-dessus ou d'un composé de formule **(I)**: 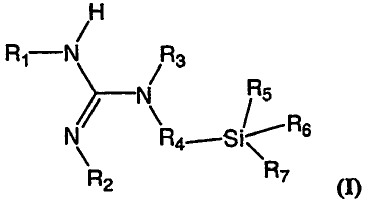 dans laquelle,
- R₁ et R₂, identiques ou différents, représentent, indépendamment l'un de l'autre, un groupe alkyle monovalent linéaire ou ramifié, un groupe cycloalkyle, un groupe (cycloalkyl)alkyle, le cycle étant substitué ou non et pouvant comprendre au moins un hétéroatome, un groupe arylalkyle, fluoroalkyle, aryle substitué ou non, R₁₁R₁₂R₁₃Si, où R₁₁, R₁₂, et R₁₃ sont des groupes alkyles monovalents linéaires ou ramifiés,
- R₃ représente un atome d'hydrogène, un groupe alkyle monovalent linéaire ou ramifié, un groupe cycloalkyle, un groupe alkyle substitué par un cycle, substitué ou non et pouvant comprendre au moins un hétéroatome , un groupe arylalkyle, fluoroalkyle, alkylamine, alkylguanidine, aryle substitué ou non, un alkylalcoxysilane,
- R₄ représente une chaîne alkyle linéaire ou ramifiée contenant 1 à 50 atomes, de préférence de 1 à 20, certains pouvant être des hétéroatomes choisis parmi O, S et N,
- R₅, R₆ et R₇, identiques ou différents, représentent, indépendamment l'un de l'autre, un groupe alkyle linéaire ou ramifié, un groupe aromatique, un groupe alcoxy, ou un groupe trialkylsilyloxy de formule **(I')** suivante: 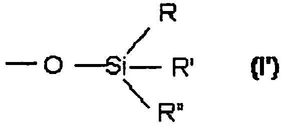
- R, R' et R", identiques ou différents, représentent, indépendamment l'un de l'autre, un groupe alkyle linéaire ou ramifié en C₁-C₁₂, ou un groupe aromatique, et
avec la condition que si R₃ est un atome d'hydrogène" alors R₁ et R₂ ne sont ni l'un ni l'autre un groupe hydrocarboné monovalent linéaire.

Le sel de guanidinium **(IV)** peut être obtenu par addition d'un acide carboxylique (par exemple un acide carboxylique linéaire ou ramifié en C₂-C₁₅) sur le composé de formule **(I)** en présence ou non d'un solvant.

Les catalyseurs conformes à la présente invention sont non toxiques, contrairement aux catalyseurs à base d'alkylétain. De plus, ils permettent d'atteindre, aussi bien dans des conditions monocomposant que bicomposant, des vitesses de polycondensation des silicones aussi élevées voire meilleures que celles obtenues avec ces catalyseurs à base d'alkylétain.

### Description de la base silicone B :

Les bases silicone utilisées dans la présente invention réticulant et durcissant par des réactions de polycondensation sont bien connues. Ces bases sont décrites en détail en particulier dans de nombreux brevets et elles sont disponibles dans le commerce.

Ces bases silicones peuvent être mono-composantes, c'est-à-dire conditionnées en un seul emballage, et stables au stockage en l'absence d'humidité, durcissables en présence d'humidité, en particulier d'humidité apportée par l'air ambiant ou par de l'eau générée au sein de la base lors de son emploi.

En dehors des bases mono-composantes peuvent être utilisées des bases bi-composantes, c'est-à-dire conditionnées en deux emballages, qui durcissent dès l'incorporation du catalyseur de polycondensation selon l'invention. Elles sont conditionnées après incorporation du catalyseur en deux fractions séparées, l'une des fractions pouvant ne renfermer par exemple que le catalyseur selon l'invention ou un mélange avec l'agent réticulant.

La base silicone **B** utilisée pour réaliser la composition selon l'invention peut comprendre:
- au moins une huile polyorganosiloxane **C** susceptible de réticuler par polycondensation en un élastomère;
- éventuellement au moins un agent de réticulation **D**;
- éventuellement au moins un promoteur d'adhérence **E**; et
- éventuellement au moins une charge minérale siliceuse, organique et/ou non siliceuse **F**.

L'huile polyorganosiloxane **C** est de préférence un polymère α,ω-dihydroxypolydiorganosiloxane, de viscosité comprise entre 50 et 5 000 000 mPa.s à 25°C et l'agent de réticulation **D** est de préférence un composé organosilicié portant plus de deux groupes hydrolysables liés aux atomes de silicium par molécule. L'huile polyorganosiloxane **C** peut également être fonctionnalisée au niveau de ses extrémités par des radicaux hydrolysables obtenu par condensation d'un précurseur porteur de fonctions hydroxyles avec un silane réticulant porteur de radicaux hydrolysables.

Comme agent de réticulation **(D)** on peut citer :
- les silanes de formule générale suivante :

   R¹ₖ Si(OR²)₍₄₋ₖ₎

   dans laquelle les symboles R², identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆, le symbole R¹ représente un groupe hydrocarboné aliphatique saturé ou insaturé, linéaire ou ramifié, un groupe carbocyclique, saturé ou insaturé et/ou aromatique, monocyclique ou polycyclique et k est égal à 0, 1 ou 2 ; et
- les produits d'hydrolyse partielle de ce silane.

Comme exemple de radicaux alcoxyalkylène en C₃-C₆ on peut citer les radicaux suivants :
CH₃OCH₂CH₂-
CH₃OCH₂CH(CH₃)-
CH₃OCH(CH₃)CH₂-
C₂H₅OCH₂CH₂CH₂-

Le symbole R¹ représente un radical hydrocarboné en C₁-C₁₀ englobant:
- les radicaux alkyles en C₁-C₁₀ tels que les radicaux méthyle, éthyle, propyle, butyle, pentyle, éthyl-2 hexyle, octyle, décyle,
- les radicaux vinyle, allyle, et
- les radicaux cycloalkyles ce C₅-C₈ tels que les radicaux phényle, tolyle et xylyle.

Les agents de réticulation **D** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Parmi les agents de réticulation **D,** on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Comme autres exemples d'agents de réticulation **D** qui peuvent être utilisés, on cite plus particulièrement les silanes suivants :
- le propyltriméthoxysilane,
- le méthyltriméthoxysilane,
- l'éthyltriméthoxysilane,
- le vinyltriéthoxysilane,
- le méthyltriéthoxysilane,
- le propyltriéthoxysilane,
- le tétraéthoxysilane,
- le tétrapropoxysilane,
- le 1,2-bis(triméthoxysilyl)éthane,
- le 1,2-bis(triéthoxysilyl)éthane, et
- le tétraisopropoxysilane,
ou encore: CH₃Si(OCH))₃ ; C₂H₅Si(OC₂H₅)₃ ; C₂H₅Si(OCH₃)₃ CH₂=CHSi(OCH₃)₃; CH₂=CHSi(OCH₂CH₂OCH₃) C₆H₅Si(OCH₃)₃ ; [CH₃][OCH(CH₃)CH₂OCH₃]Si[OCH₃]₂ Si(OCH₃)₄ ; Si(OC₂H₅)₄; Si(OCH₂CH₂CH₃)₄; Si(OCH₂CH₂CH₂CH₃)₄ Si(OC₂H₄OCH₃)₄ ; CH₃Si(OC₂H₄OCH₃)₃ ; CICH₂Si(OC₂H₅)₃ ;

Comme autres exemples d'agent de réticulation **D,** on peut citer le polysilicate d'éthyle, ou le polysilicate de n-propyle.

On utilise généralement de 0,1 à 60 parties en poids d'agent de réticulation **D** pour 100 parties en poids de polyorganosiloxane **C** susceptible de réticuler par polycondensation en un élastomère.

Ainsi la composition selon l'invention peut comprendre au moins un promoteur d'adhérence **E** tel que par exemple les composés organosiliciques portant à la fois :
(1) un ou des groupes hydrolysables liés à l'atome de silicium, et
(2) un ou des groupes organiques substitués par des radicaux comprenant un atome d'azote ou choisis dans le groupe des radicaux (méth)acrylate, époxy, et alcényle, et plus préférentiellement encore dans le groupe constitué par les composés suivants pris seul ou en mélange:
   vinyltriméthoxysilane (VTMO),
   3-glycidoxypropyl-triméthoxysilane (GLYMO),
   méthacryloxypropyltriméthoxysilane (MEMO),
   [H₂N(CH₂)₃]Si(OCH₂CH₂CH₃)₃.
   [H₂N(CH₂)₃]Si(OCH₃)₃
   [H₂N(CH₂)₃]Si(OC₂H₅)₃
   [H₂N(CH₂)₄]Si(OCH₃)₃
   [H₂NCH₂CH(CH₃)CH₂CH₂]SiCH₃(OCH₃)₂
   [H₂NCH₂]Si(OCH₃)₃
   [n-C₄H₉-HN-CH₂]Si(OCH₃)₃
   [H₂N(CH₂)₂NH(CH₂)₃]Si(OCH₃)₃
   [H₂N(CH₂)₂NH(CH₂)₃]Si(OCH₂CH₂OCH₃)₃
   [CH₃NH(CH₂)₂NH(CH₂)₃]Si(OCH₃)₃
   [H(NHCH₂CH₂)₂NH(CH₂)₃]Si(OCH₃)₃ 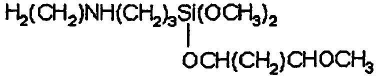 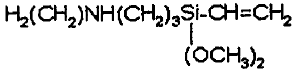 ou des oligomères polyorganosiloxaniques contenant de tels groupes organiques à une teneur supérieure à 20%.

Pour les bases mono- et bi-composantes, on utilise comme charges minérales F des produits très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g.

L'introduction des charges a pour but de conférer de bonnes caractéristiques mécaniques et rhéologiques aux élastomères découlant du durcissement des compositions conformes à l'invention.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Par exemple on peut utiliser les coktails d'oxyde décrits dans la demande internationale WO 98/29488. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

D'autres agents auxiliaires et additifs usuels peuvent être incorporés à la composition selon l'invention; ceux-ci sont choisis en fonction des applications dans lesquelles sont utilisées lesdites compositions.

La base silicone utilisée pour réaliser la composition selon l'invention peut comprendre:
- 100 parties d'huile polyorganosiloxane **C** susceptible de réticuler par polycondensation en un élastomère ;
- 0 à 20 parties d'un agent de réticulation **D**;
- 0 à 20 parties d'un promoteur d'adhérence **E**; et
- 0 à 50 parties de charge **F**.

Outre les constituants principaux, des polymères polyorganosiloxanes linéaires non réactif **G** peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactif **G** sont bien connus; ils comprennent plus spécialement: des polymères α,ω-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties, de préférence de 5 à 20 parties, pour 100 parties de d'huile polyorganosiloxane **C** susceptible de réticuler par polycondensation.

Les compositions selon l'invention peuvent en outre avantageusement comprendre au moins une résine silicone **H**. Ces résines silicones sont des polymères organopolysiloxanes ramifiés bien connus et disponibles dans le commerce. Elles présentent, par molécule, au moins deux motifs différents choisis parmi ceux de formule R"'₃SiO_{1/2} (motif M), R"'₂SiO_{2/2} (motif D), R"'SiO_{3/2} (motif T) et SiO₄₂ (motif Q). Les radicaux R"' sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle. Ces résines sont de préférence hydroxylées et ont dans ce cas une teneur pondérale en groupe hydroxyle comprise entre 5 et 500 meq/100 g.

Comme exemple de résines, on peut citer les résines MQ, les résines MDQ, les résines TD et les résines MDT.

Pour fabriquer les compositions conformes à l'invention, il est nécessaire dans le cas des compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités. Tous ces ingrédients peuvent être chargés dans l'appareillage selon un ordre quelconque d'introduction. Ainsi il est possible de mélanger tout d'abord les huiles organopolysiloxanes **C** et les charges **F** et d'ajouter ensuite à l'empâtage obtenu les réticulants **D**, les composés **E** et le catalyseur selon l'invention. Il est également possible de mélanger les huiles **C**, les réticulants **D**, les composés **E** et les charges **F** et d'ajouter ultérieurement le catalyseur selon l'invention. Au cours de ces opérations, les mélanges peuvent être chauffés à une température comprise dans l'intervalle 50-180°C sous la pression atmosphérique ou sous une pression réduite afin de favoriser le départ de matières volatiles.

Les compositions mono-composantes, conformes à l'invention, utilisées telles quelles, c'est-à-dire non diluées, ou sous forme de dispersions dans des diluants, sont stables au stockage en l'absence d'eau et durcissent dès les basses températures (après départ des solvants dans le cas des dispersions) en présence d'eau pour former des élastomères.

Après le dépôt des compositions telles quelles, sur des substrats solides, en atmosphère humide, on constate qu'un processus de durcissement en élastomères se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps de quelques minutes; cette période dépendant du taux d'humidité relative de l'atmosphère entourant les compositions et de la faculté de réticulation de celles-ci.

Par ailleurs le durcissement en profondeur des couches déposées, qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Les compositions mono-composantes peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

La fabrication des compositions bi-composantes conformes à l'invention s'effectue également par mélange des divers constituants dans des appareils appropriés. Pour obtenir des compositions homogènes, il est préférable de mélanger tout d'abord les polymères **A** avec les charges **C** ; l'ensemble peut être chauffé au moins 30 minutes à une température supérieure à 80°C, de manière à parfaire le mouillage des charges par les huiles. Au mélange obtenu, porté de préférence à une température inférieure à 80°C, par exemple de l'ordre de la température ambiante, peuvent être ajoutés les autres constituants, c'est-à-dire les agents réticulants, le catalyseur et éventuellement des additifs et adjuvants divers et même de l'eau.

Les compositions conformes à l'invention peuvent être employées pour de multiples applications comme le jointoiement et/ou le collage dans l'industrie du bâtiment, l'industrie du transport (exemples : automobile, aérospatiale, ferroviaire, maritime et aéronautique), l'assemblage des matériaux les plus divers (métaux, matières plastiques, caoutchoucs naturels et synthétiques, bois, cartons, polycarbonate, faïence, brique, céramique, verre, pierre, béton et éléments de maçonnerie), l'isolation de conducteurs électriques, l'enrobage de circuits électroniques et la préparation de moules servant à la fabrication d'objets en résines ou mousses synthétiques.

Ainsi, un autre objet de l'invention consiste en un système bicomposant précurseur de la composition organopolysiloxanique selon l'invention et telle que définie ci-dessus et vulcanisable en élastomère silicone par des réactions de polycondensation et caractérisé en ce qu'il se présente en deux parties **P1** et **P2** distinctes destinées à être mélangées pour former ladite composition, et en ce que l'une de ces parties comprend le catalyseur selon l'invention et tel que défini ci-dessus comme catalyseur de la réaction de polycondensation d'organopolysiloxanes et l'agent de réticulation **D** alors que l'autre partie est exempte des espèces précitées et comprend:
- pour 100 parties en poids de l'huile (ou des huiles) polyorganosiloxane(s) **C** susceptible(s) de réticuler par polycondensation en un élastomère,
- de 0.001 à 10 partie(s) en poids d'eau.

Un autre objet de l'invention consiste aussi en une composition polyorganosiloxanique monocomposant stable au stockage en l'absence d'humidité et réticulant, en présence d'eau, en élastomère, caractérisée en ce qu'elle comprend:
- au moins un polyorganopolysiloxane linéaire réticulable présentant des extrémités fonctionnalisées de type alcoxy, oxime, acyle et /ou énoxy, de préférence alcoxy,
- une charge, et
- le catalyseur de la réaction de polycondensation selon l'invention et tel que défini ci-dessus.

Des bases mono-composantes sont décrites en détail par exemple dans les brevets EP 141 685, EP 147 323, EP 102 268, EP 21 859, FR 2 121 289 et FR 2 121 631, cités en référence.

A ces bases mono-composantes peuvent être ajoutés des promoteurs d'adhérence **E** choisis par exemple parmi les composés organosiliciés portant à la fois, d'une part, des groupes organiques substitués par des radicaux choisis dans le groupe des radicaux amino, uréido, isocyanate, époxy, alkènyle, isocyanurate, hydentoile, guanidino et mercaptoester et, d'autre part des groupes hydrolysables, en général des groupes alcoxy liés aux atomes de silicium. Des exemples de tels agents d'adhérence sont décrits dans les brevets américains US 3 517 001, US 4 115 356, US 4 180 642, US 4 273 698, US 4 356 116 et dans les brevets européens EP 31 996 et EP 74 001.

Des bases bi-composantes sont décrites en détail par exemple dans les brevets EP 118 325, EP 117 772, EP 10 478, EP 50 358, EP 184 966, US 3 801 572 et US 3 888 815, cités comme référence.

Le dernier objet selon l'invention consiste en un élastomère obtenu par réticulation et durcissement du système bi-composant selon l'invention et tel que décrit ci-dessus, ou de la composition selon l'invention et telle que décrite ci-dessus.

D'autres avantages et caractéristiques de la présente invention apparaîtront à la lecture des exemples suivants donnés à titre illustratif nullement limitatif.

### EXEMPLES

### 1.1,2-diisopropyl-3-(3-(triméthoxysilyl)propyl)guanidine (1)

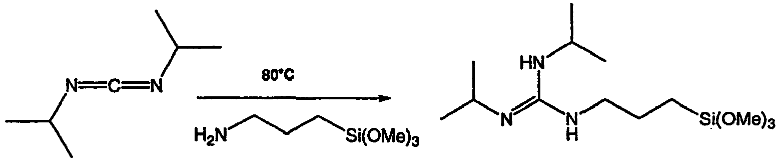

Un mélange de 11.74 g de (3-(triméthoxysilyl)propyl)amine (0,0654 mol) et de 9,9 g de diisopropylcarbodiimide (0,0785 mol, 20 % d'excès) est chauffé 6h30 à 80°C. L'analyse par CPG montre alors une conversion supérieure à 97 % de l'amine. Le mélange final incolore est évaporé à sec à 100°C sous 2 mbar pendant 2 h pour donner 22,5 g d'un liquide incolore de faible viscosité, correspondant à la guanidine attendue.

RMN ¹H/CDCl₃ (ppm) : 0.69 (2 H, m), 1.12 (12 H, d), 1.63 (2 H, quint.), 2.99 (2 H, t), 3.48 (11 H, se - le déplacement des protons isopropyliques est confondu avec les protons des méthoxy)

### 2.1-(3-(diéthoxy(méthyl)silyl)propyl)-2,3-diisopropylguanidine (5)

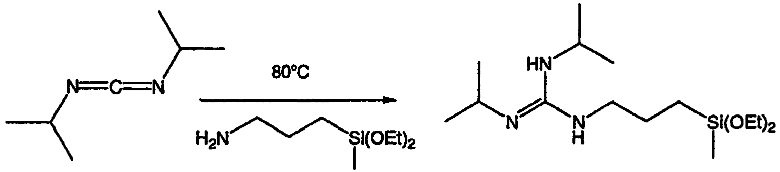

Un mélange de 28.94 g de 3-(diéthoxy(méthyl)silyl)propylamine (0,151 mol, 20% d'excès) et de 15.9 g de diisopropylcarbodiimide (0,126 mol) est chauffé 9h à 80°C (conversion de la carbodiimide de 97.3 %).
Le mélange final incolore est dévolatilisé à 100°C sous 2 mbar pendant 2 h pour donner 44 g d'un liquide incolore de faible viscosité, correspondant à un mélange de la guanidine attendue et de l'amine silylée en excès (9.8 %p).

RMN ¹H/CDCl₃ (ppm) de la guanidine silylée : 0.0 (3 H, s), 0.54 (2 H, m), 1.01 (12 H, d), 1.1 (6 H, t), 1.49 (2 H, m), 2.88 (2 H, t), 3.46 (2 H, m), 3.64 (4 H, quad.).

### 3. 2,3-diisopropyl-1-méthyl-1-(3-(triméthoxysilyl)propyl)guanidine (7)

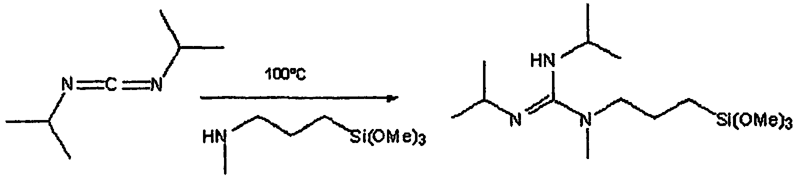

Un mélange de 60.5 g de N-méthyl (3-(triméthoxysilyl)propyl)amine (0,313 mol) et de 47.6 g de diisopropylcarbodiimide (0,376 mol, 20 % d'excès) est chauffé 3h30 à 100°C (conversion de l'amine supérieure à 99 %). Le mélange final incolore est dévolatilisé à 100°C sous 2 mbar pendant 2 h pour donner 99.5 g d'un liquide incolore de faible viscosité, correspondant à la guanidine attendue.

RMN ¹H/CDCl₃ (ppm) : 0.5 (2 H, m), 1.0 (12 H, 2 d), 1.53 (2 H, quint.), 2.61 (3 H, s), 2.98 (2 H, t), 3.21 (1 H, sept), 3.32 (1 H, sept), 3.48 (9 H, s).

### 4. 2,3-diisopropyl-1-méthyl-1-(3-(méthyldiméthoxysilyl)propyl)guanidine (10)

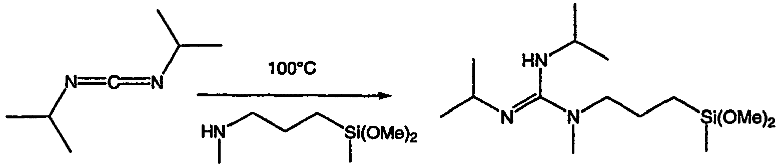

Un mélange de 27 g de N-méthyl (3-(méthyldiméthoxysilyl)propyl)amine (0,152 mol, excès 20 %) et de 16 g de diisopropylcarbodiimide (0,127 mol) est chauffé 8h à 100°C (conversion de la carbodiimide de 98 %). Le mélange final incolore est dévolatilisé à 100°C sous 2 mbar pendant 2 h pour donner 39.3 g d'un liquide incolore de faible viscosité, correspondant à la guanidine attendue, contenant 2 %p de l'amine de départ.

RMN ¹H/CDCl₃ (ppm) de la guanidine : 0.0 (3 H, s), 0.46 (2 H, m), 0.97 (12 H, m), 1.46 (2 H, m), 2.58 (3 H, s), 2.95 (2 H, t), 3.18 (1 H, m), 3.28 (1 H, m), 3.40 (6 H, s).

### 5. 1-butyl-2,3-diisopropyl-1-(3-(triméthoxysilyl)propyl)guanidine (13)

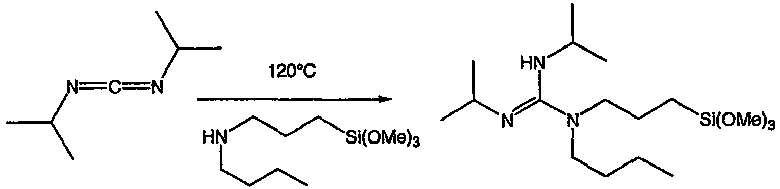

Un mélange de 45 g de N-butyl (3-(triméthoxysilyl)propyl)amine (0,191 mol) et de 28:95 g de diisopropylcarbodiimide (0,229 mol, excès 20%) est chauffé 20h à 120°C (conversion de l'amine de 93 %). Le mélange final incolore est dévolatilisé à 120°C sous 1 mbar pendant 2 h pour donner 67 g d'un liquide incolore de faible viscosité, correspondant à la guanidine attendue, contenant 4 %p de l'amine de départ.

RMN ¹H/CDCl₃ (ppm) de la guanidine : 0.58 (2 H, m), 0.88 (3 H, t), 1.07 (12 H, 2 d), 1.26 (2 H, sext.), 1.44 (2 H, quint.), 1.58 (2 H, quint.), 3.06 (4 H, t), 3.30 (1 H, m), 3.41 (1 H, m), 3.55 (9 H, s).

### 6. 1,1-bis(3-(triméthoxysilyl)propyl)-2,3-diisopropylguanidine (19)

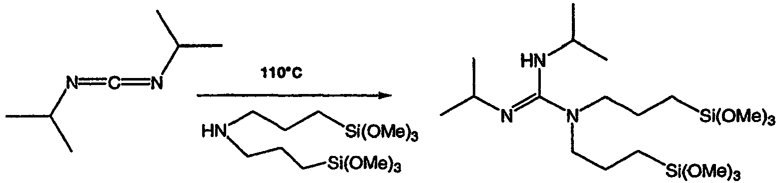

Un mélange de 30,84 g de bis(3-(triméthoxysilyl)propyl)amine (0,0903 mol) et de 13,68 g de diisopropylcarbodiimide (0,1084 mol, 20 % d'excès) est chauffé 31 h à 110°C (conversion 94 % de l'amine). Le mélange final incolore est dévolatilisé à 100°C sous 2 mbar pendant 2 h pour donner 42 g d'un liquide incolore de faible viscosité, correspondant à la guanidine attendue, contenant 4 % de l'amine de départ.

RMN ¹H/CDCl₃ (ppm) de la guanidine : 0.56 (4H, m), 1.07 (12H, m), 1.57 (4H, m), 3.05 (4H, t), 3.30 (1H, sept.), 3.43 (1H, sept.), 3.54 (18H, s.)

### 7. 2,3-dicyclohexyl-1-methyl-1-(3-(triméthoxysilyl)propyl)guanidine (34)

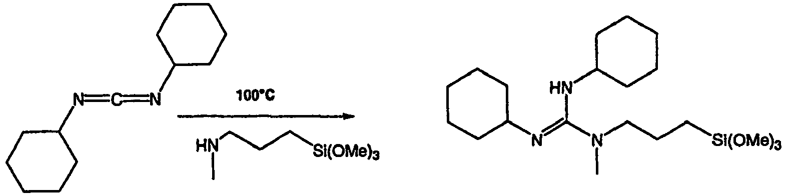

Un mélange de 23.23 g de N-méthyl (3-(triméthoxysilyl)propyl)amine (0,12 mol, excès 20 %) et de 20.65 g de dicyclohexylcarbodiimide (0,1 mol) est chauffée 6 h à 100°C (conversion carbodiimide 94 %). Le mélange final incolore est dévolatilisé à 100°C sous 2 mbar pendant 2 h pour donner 41.3 g d'un liquide incolore moyennement visqueux, correspondant à la guanidine attendue contenant 6 % d'amine de départ.

RMN ¹H/CDCl₃ (ppm) de la guanidine : 0.58 (2 H, m), 1-1.4 (10 H, m), 1.5-2 (12 H, m), 2.69 (3 H, s), 2.8-3.1 (2 H, m), 3.07 (2 H, t), 3.56 (9 H, s).

### 8. 2,3-diisopropyl-1-[(3-éthoxysilyl)propyl]-1-[2-[2,3-diisopropyl)guanidino]éthyl] guanidine (54)

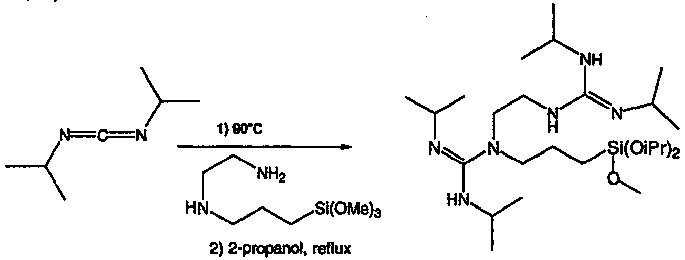

Un mélange de 20,01 g de N-[3-(triméthoxysilyl)propyl]éthylènediamine (0.09 mol) et de 27,26 g de diisopropylcarbodiimide (0,216 mol, 20 % d'excès) est chauffé 8h à 90°C et 72h à 70°C (conversion 100% sur diamine, 93 % sur intermédiaires monoguanidine).
Le mélange final incolore est dévolatilisé à 100°C sous 2 mbar pendant 2 h pour donner 41,6 g d'un liquide très visqueux qui cristallise au bout de quelques minutes. Le solide est repris par 50 ml de 2-propanol, et la solution est chauffée à reflux, en distillant le méthanol formé, pendant 3h, puis de nouveau évaporée à sec pour donner un liquide moyennement visqueux, correspondant à la guanidine attendue, à substitution moyenne SiOMe(OiPr)₂.

### 9. Synthèse de la 2,3-diisopropyl-1-méthyl-1-(3-(bis(triméthylsilyloxy)méthylsilyl) propyl) guanidine (12)

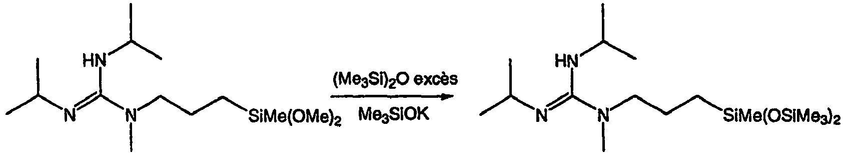

Un mélange de 2 g de 2,3-diisopropyl-1-méthyl-1-(3-(méthyldiméthoxysilyl) propyl) guanidine, de 10 g d'hexaméthyldisiloxane et de 50 mg de silanolate de potassium est chauffé à 100°C durant 24h. Après refroidissement, le milieu trouble est dilué par de l'heptane. La suspension est filtrée puis évaporée à sec pour donner 2.5 g d'un liquide incolore non visqueux. L'analyse par RMN ¹H montre que l'échange a été réalisé à plus de 90 %.

### 10. Compositions mono-composantes

### 10.1. Test en empâtage - réticulant vinyltriméthoxysilane

L'empâtage utilisé est préparé comme suit : à un mélange de 3464 g d'une huile α,ω-dihydroxylée de viscosité de 20000 centipoises contenant 0.066% d'OH, et de 120 g de vinyltriméthoxysilane sous agitation est ajouté 16 g d'une solution de lithine à 2 % en poids dans le méthanol, puis après 5 min, 400 g de silice de pyrogénation AE55 sont ajoutés. Le mélange est dévolatilisé sous vide puis stocké à l'abri de l'humidité.
Pour chaque test, le catalyseur testé est mélangé à 50 g de cet empâtage, puis le potentiel catalytique est évalué de 3 façons (voir les tableaux de résultats ci- après) :
- le temps de formation de peau (TFP), temps au bout duquel on observe une réticulation en surface, sur film de 2 mm,
- la persistance d'un toucher collant à 48h,
- la dureté (en Shore A) d'un cordon de 6 mm d'épaisseur dans de conditions régulées (23°C et 50% d'humidité relative) et sur des temps croissants (2, 3, 4,7 et 14 jours). La stabilité à haute température est aussi évaluée par des mesures de dureté réalisées sur le cordon après 7 jours à température ambiante suivis de 7 jours à 100°C.
   Nota : La dureté Shore est mesurée sur un cordon de 6 mm. Dans les tableaux de résultats, le symbole « > » correspond aux valeurs de dureté mesurées sur la partie supérieure du cordon et le symbole « < » correspond aux valeurs de dureté mesurées sur la partie inférieure du cordon moins exposée à l'air ambiant que la partie supérieure.

Différents catalyseurs selon l'invention ont été testés.
A titre comparatif, comme précédemment, ont été également testés:
- un catalyseur à base d'étain: le dilaurate de dibutylétain (DLDBE).
- la 1,1,3,3-tétraméthylguanidine
- un catalyseur décrit dans le brevet US 4,248,993 qui est la 1,1,3,3-tétraméthyl-(3-triéthoxysilyl)propyl)guanidine ayant la formule suivante:

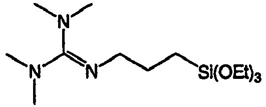

Les résultats sont indiqués dans le tableau I ci-après.

**Tableau I**

| **Référence** | **Produit** | **mol/Sn (1)** | **% poids** | **TFP baton min** | **Toucher collant à 48h** | **Dureté Shore A sur 6mm** | | | | | | | | | | | |
|---|---|---|---|---|---|---|---|---|---|---|---|---|---|---|---|---|---|
| | | | | | | **2J** | | **3J** | | **4J** | | **7J** | | **14J** | | **7J TA + 7J 100°C** | |
| | | | | | | **>** | **<** | **>** | **<** | **>** | **<** | **>** | **<** | **>** | **<** | **>** | **<** |
| Comparatif | DLDBE | 1 | 1,1 | 20 | non | 34 | 26 | 35 | 31 | 35 | 32 | 33 | 30 | 34 | 31 | 33 | 30 |
| Comparatif | 1,1,3,3 tétramethylguanidine | 4 | 0,6 | 2 | oui | 2 | 1 | 2 | 1 | | | 4 | 3 | 2 | 1 | 1 | 1 |
| Comparatif | 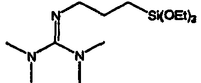 | 5,7 | 2,6 | 2 | non | 20 | 3 | 24 | 11 | 24 | 13 | 26 | 18 | 20 | 15 | 17 | 10 |
| 1 | 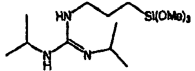 | 3 | 1,3 | 1 | non | 30 | 16 | 31 | 20 | 32 | 21 | 32 | 22 | 34 | 23 | 22 | 15 |
| 5 | 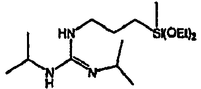 | 4 | 1,8 | 1 | non | 27 | 18 | 27 | 20 | | | 30 | 20 | 30 | 20 | 18 | 12 |
| 7 | 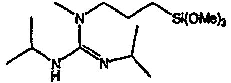 | 3 | 1,3 | 1 | non | 29 | 16 | 31 | 21 | 33 | 21 | 32 | 24 | 31 | 24 | 30 | 23 |
| | | 2 | 0,9 | 1 | non | 27 | 10 | 30 | 16 | 31 | 19 | 30 | 22 | 30 | 22 | 31 | 22 |
| | | 1,5 | 0,7 | 2 | oui | 20 | 5 | 25 | 10 | 27 | 15 | 29 | 19 | 33 | 22 | 32 | 21 |
| 10 | 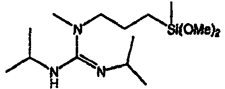 | 1,5 | 0,6 | 2 | non | 30 | 7 | 34 | 14 | 34 | 17 | 36 | 22 | 36 | 25 | 34 | 24 |
| 13 | 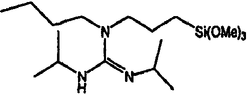 | 3 | 1,5 | 2 | non | 33 | 20 | 33 | 25 | 33 | 26 | 33 | 26 | 31 | 26 | 31 | 26 |
| 19 | 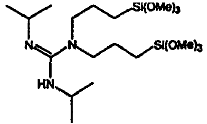 | 4 | 2,7 | 1 | non | 39 | 7 | 40 | 16 | | | 40 | 19 | 40 | 20 | 40 | 20 |
| 54 | 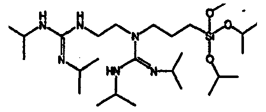 | 1 | 0,8 | 1 | non | 29 | 21 | 30 | 23 | 29 | 22 | 31 | 24 | 33 | 25 | 27 | 22 |
| 12 | 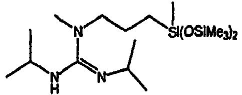 | 1,5 | 0,9 | 3 | non | 35 | 26 | 35 | 27 | 35 | 28 | 35 | 28 | 36 | 29 | 36 | 29 |
| | | 0,75 | 0,4 | 6 | non | 32 | 15 | 33 | 24 | 34 | 26 | 34 | 27 | 37 | 29 | 35 | 28 |

| | | | | | | | | | | | | | | | | | |
|---|---|---|---|---|---|---|---|---|---|---|---|---|---|---|---|---|---|
| (1) Indique pour chaque exemple le ratio [catalyseur]/[Sn]_{comparatif 1*} | | | | | | | | | | | | | | | | | |

Si le dilaurate de dibutylétain est un bon catalyseur au niveau de la cinétique de réticulation (dureté), le temps de formation de peau est 5 à 10 fois plus élevé par rapport à ceux donnés par les guanidines en général. Par contre, la 1,1,3,3-tétraméthylguanidine ne permet pas la réticulation de l'huile silicone en profondeur, pourtant à une concentration molaire supérieure que les guanidines silylées selon l'invention. Quant au catalyseur comparatif de structure pentasubstituée, la 1,1,3,3-tétraméthyl-(3-triéthoxysilyl)propyl) guanidine, qui a été ajoutée à une concentration molaire 50 % supérieure, la cinétique de réticulation est bien inférieure à celles des guanidines silylées selon l'invention, notamment manque de réticulation en profondeur et le film de 2 mm se déchirant à 48h.

Ces résultats montrent que les catalyseurs selon l'invention, non toxiques, conduisent à une catalyse plus rapide que les catalyseurs à base d'étain et surtout que la structure tétraméthylguanidine. Les catalyseurs selon l'invention peuvent donc avantageusement remplacer les catalyseurs existants. D'autre part, les temps de formation de peau peuvent être allongés en diminuant la concentration de catalyseur à condition que la fonction silane soit rendue suffisamment peu réactive (référence 12), et cela avec des cinétiques de dureté comparables à celles obtenues avec les dialkylétains. Les élastomères obtenus sont particulièrement stables à chaud dans le cas des guanidines tétrasubstituées (références 7, 10, 13, 19 et 12).

### 10.2. Test en empâtage - réticulant vinyltriéthoxysilane

L'empâtage utilisé est préparé comme suit : à un mélange de 857.5 g d'une huile α,ω-dihydroxylée de viscosité de 20000 centipoises contenant 0.066% d'OH, et de 38.5 g de vinyltriéthoxysilane sous agitation est ajouté 4 g d'une solution de lithine à 4 % en poids dans le méthanol, puis après 20 min, 100 g de silice de pyrogénation AE55 sont ajoutés. Le mélange est dévolatilisé sous vide puis stocké à l'abri de l'humidité.
Pour chaque test, le catalyseur testé est mélangé à 50 g de cet empâtage, puis le potentiel catalytique est évalué de la même façon que précédemment.

Différents catalyseurs selon l'invention ont été testés.
A titre comparatif, comme précédemment, a été également testé:
- un catalyseur à base d'étain: le dilaurate de dibutylétain.

Les résultats sont indiqués dans le tableau II ci-après:

**Tableau II**

| **Référence** | **Produit** | **mol/Sn** | **% poids** | **TFP baton min** | **Toucher collant à 48h** | **Dureté Shore A sur 6mm** | | | | | | | | | | | |
|---|---|---|---|---|---|---|---|---|---|---|---|---|---|---|---|---|---|
| | | | | | | **2J** | | **3J** | | **4J** | | **7J** | | **14J** | | **7J TA + 7J 100°C** | |
| | | | | | | **>** | **<** | **>** | **<** | **>** | **<** | **>** | **<** | **>** | **<** | **>** | **<** |
| Comparatif | DLDBE | 1 | 1,1 | 60 | non | 10 | 7 | 16 | 12 | 20 | 16 | 26 | 22 | 32 | 29 | 33 | 29 |
| 5 | 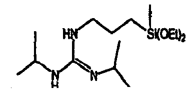 | 3 | 1,5 | 4 | non | 15 | 3 | 22 | 10 | 26 | 15 | 28 | 20 | 28 | 22 | 18 | 13 |
| 10 | 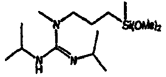 | 3 | 1,3 | 7 | non | 18 | 6 | 22 | 13 | 24 | 16 | 25 | 20 | 25 | 22 | 24 | 21 |
| 13 | 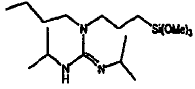 | 3 | 1,5 | 6 | non | 22 | 6 | 28 | 13 | 28 | 15 | 29 | 23 | 29 | 25 | 29 | 25 |

| | | | | | | | | | | | | | | | | | |
|---|---|---|---|---|---|---|---|---|---|---|---|---|---|---|---|---|---|
| (1) Indique pour chaque exemple le ratio [catalyseur]/[Sn]_{comparatif *} | | | | | | | | | | | | | | | | | |

Le catalyseur à l'étain donne une bonne dureté mais seulement à 7 jours avec ce système beaucoup moins réactif. Le temps de formation de peau est par ailleurs prohibitif. Avec les catalyseurs selon l'invention, les temps de formation de peau sont courts et les cinétiques de dureté beaucoup plus rapides. Un élastomère ne dégageant pratiquement que de l'éthanol est donc rendu possible avec les catalyseurs selon l'invention.

### 11. Compositions bi-composantes

La comparaison de l'activité des catalyseurs selon l'invention par rapport au catalyseur habituel (bis-néodécanoate de diméthylétain - UL28) est réalisée sur un système simplifié : à 25 g d'une huile α,ω-dihydroxylée de viscosité de 14000 centipoises contenant 0.065% d'OH est mélangé 1.06 g de silicate d'éthyle "avancé" (= partiellement hydrolysé), puis la même quantité molaire de catalyseur (0.7 mmol) reportée en %p dans le tableau III. On mesure le temps de travail ou temps de gel, puis les duretés d'un pion de 6 mm d'épaisseur. Dans le cas des guanidines silylées dont le temps de gel est très court, on peut ajouter préalablement un équivalent molaire ou moins d'un acide carboxylique pour former in situ un sel de guanidinium moins réactif.

**Tableau III**

| **Référence** | **Produit** | **% poids** | **Temps de gel min** | **DSA 6mm** | | | | | |
|---|---|---|---|---|---|---|---|---|---|
| | | | | **24h** | | **6J** | | **nJ** | |
| | | | | **>** | **<** | **>** | **<** | **>** | **<** |
| **Comparatif** | UL28 | 1,4 | 15 | 24 | 19 | 25 | 25 | 23 | 23 (21J) |
| 5 | 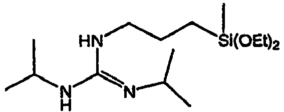 | 0,8 | 0,5 | 22 | 6 | 24 | 23 | 23 | 22 (28J) |
| | sel de guanidinium du composé 5 (dérivé n-octanoate du composé 5) | 1,2 | 18 | 17 | 15 | 25 | 25 | 26 | 26 (28J) |
| 10 | 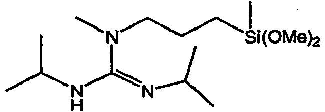 | 0,7 | 2,5 | 22 | 6 | 24 | 24 | 22 | 22 (21J) |
| | sel de guanidinium du composé 10 (dérivé n-octanoate du composé 10) | 1,1 | 80 | 10 | 11 | 22 | 23 | 22 | 25 (13J) |

A 6 jours, tous les systèmes catalytiques sont équivalents. La formation de sels de guanidiniums permet de moduler la grande réactivité des catalyseurs selon l'invention.

## Revendications

1. Composé répondant à la formule générale **(I)**: 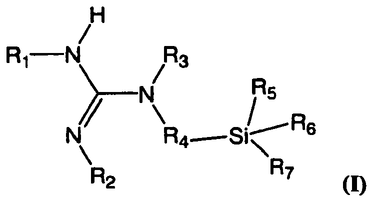 dans laquelle,
- R₁ et R₂, identiques ou différents, représentent, indépendamment l'un de l'autre, un groupe alkyle monovalent linéaire ou ramifié, un groupe cycloalkyle, un groupe (cycloalkyl)alkyle, le cycle étant substitué ou non et pouvant comprendre au moins un hétéroatome, un groupe arylalkyle, fluoroalkyle, aryle substitué ou non, R₁₁R₁₂R₁₃Si, où R_{11,} R_{12,} et R₁₃ sont des groupes alkyles monovalents linéaires ou ramifiés,
- R₃ représente un atome d'hydrogène, un groupe alkyle monovalent linéaire ou ramifié, un groupe cycloalkyle, un groupe alkyle substitué par un cycle, substitué ou non et pouvant comprendre au moins un hétéroatome , un groupe arylalkyle, fluoroalkyle, alkylamine, alkylguanidine, aryle substitué ou non, un alkylalcoxysilane,
- R₄ représente une chaîne alkyle linéaire ou ramifiée contenant 1 à 50 atomes, de préférence de 1 à 20 atomes, certains pouvant être des hétéroatomes choisis parmi O, S et N,
- R₅, R₆ et R₇, identiques ou différents, représentent, indépendamment l'un de l'autre, un groupe alkyle linéaire ou ramifié, un groupe aromatique, un groupe alcoxy, ou un groupe trialkylsilyloxy de formule (I') suivante: 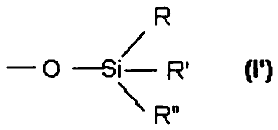
- R, R' et R", identiques ou différents, représentent, indépendamment l'un de l'autre, un groupe alkyle linéaire ou ramifié en C₁-C₁₂, ou un groupe aromatique, et
à condition que:
- si R₃ est un atome d'hydrogène, alors R₁ et R₂ ne sont ni l'un ni l'autre un groupe hydrocarboné monovalent linéaire ;
- si R₁ et R₂ sont chacun un groupe cyclohexyle R₄ un groupe propylène linéaire et R₅ = R₆ = R₇ = OEt, alors R₃ n'est pas un atome d'hydrogène; et
- si R₁ et R₂ sont chacun un groupe cyclohexyle, R₄ un groupe propylène linéaire et R₅ = R₆ = R₇ = OEt, alors R₃ n'est pas le groupe

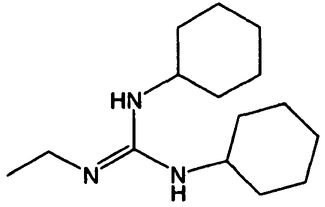

2. Composé selon la revendication 1, **caractérisé en ce que** R₁ et R₂ sont chacun un groupe isopropyle ou un groupe cyclohexyle.

3. Composé selon l'une quelconque des revendications précédentes, **caractérisé en ce que** R₃ est un atome d'hydrogène, un groupe méthyle, un groupe éthyle, un groupe propyle, un groupe butyle ou un groupe propyltrialcoxysilane.

4. Composé selon l'une quelconque des revendications précédentes, **caractérisé en ce qu'**il est choisi parmi les composés **(1)** à **(54)** suivants:

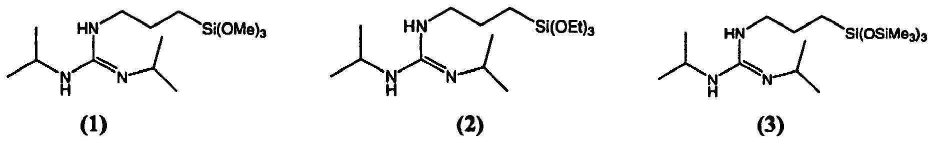

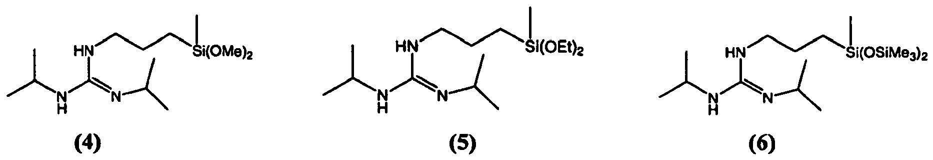

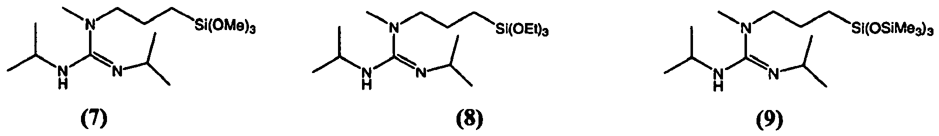

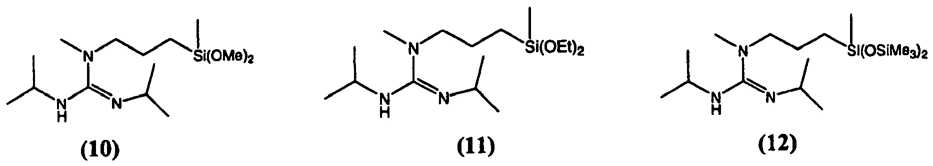

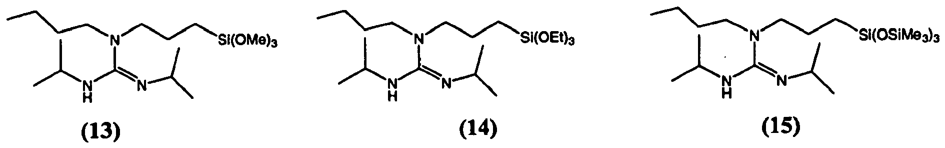

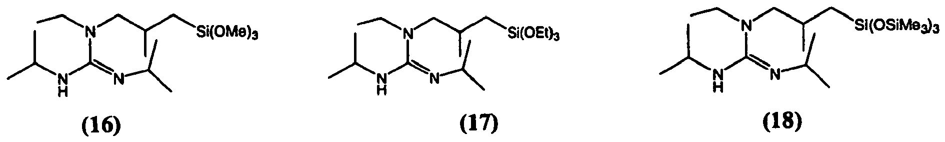

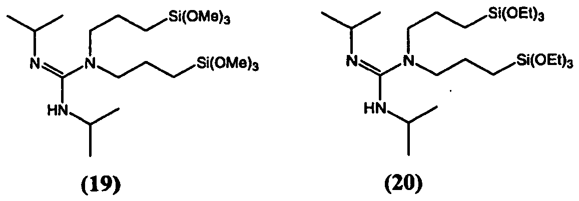

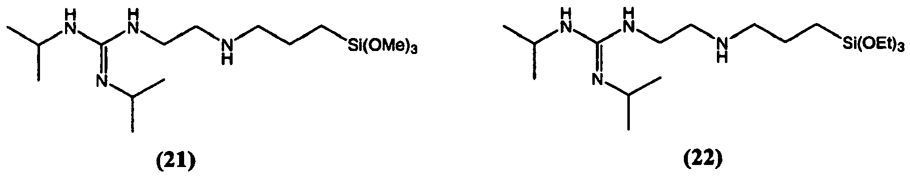

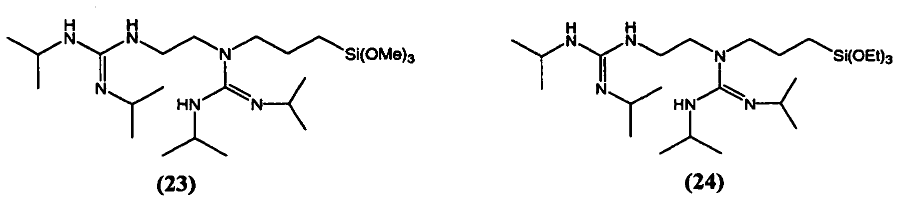

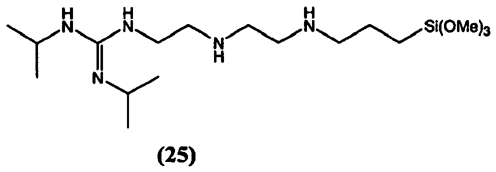

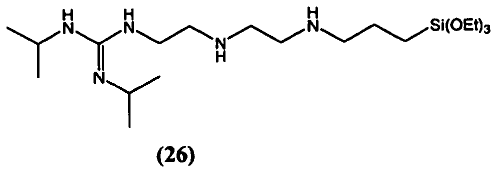

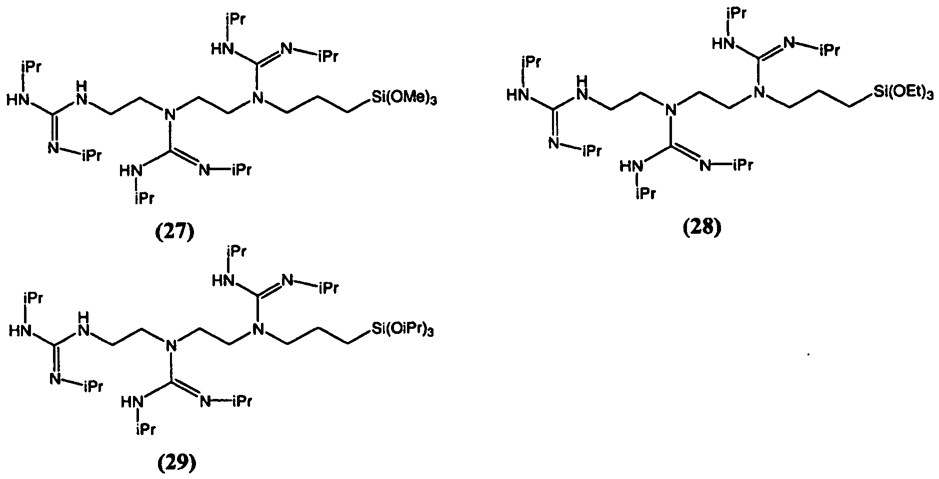

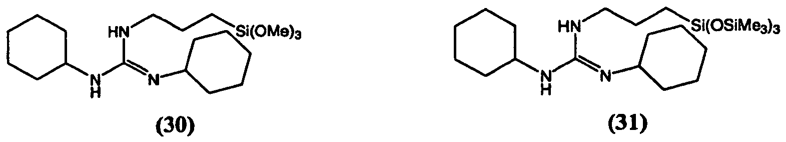

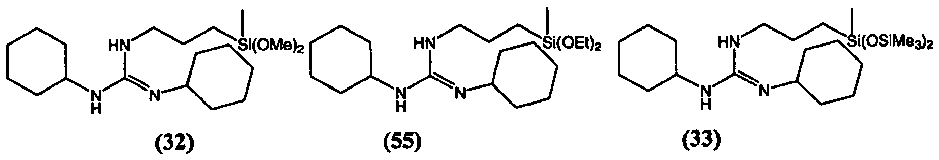

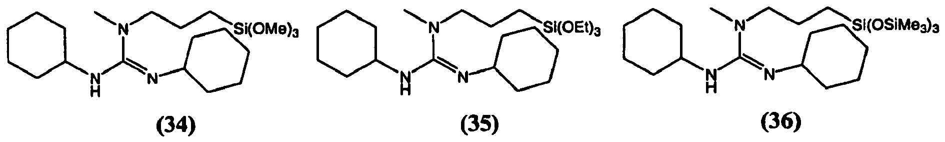

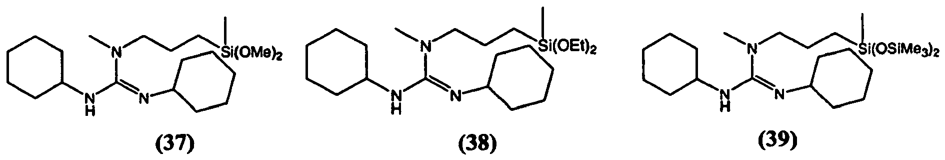

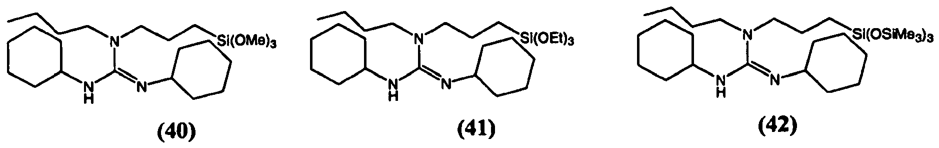

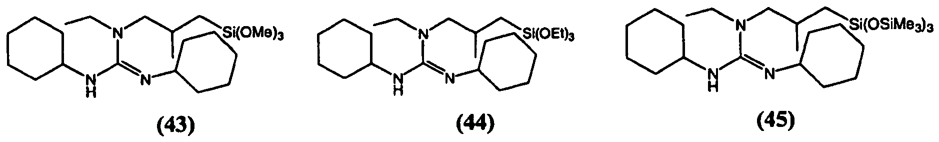

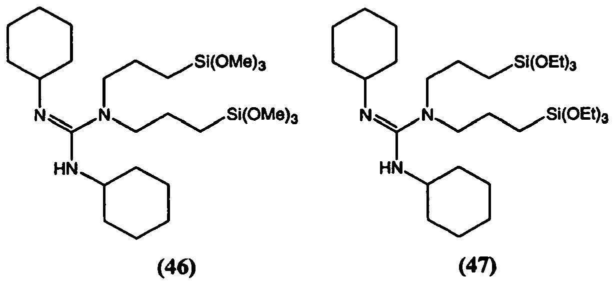

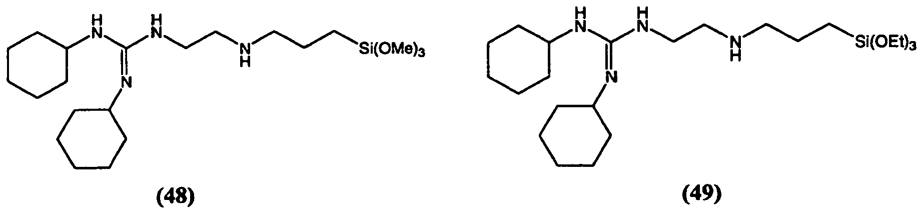

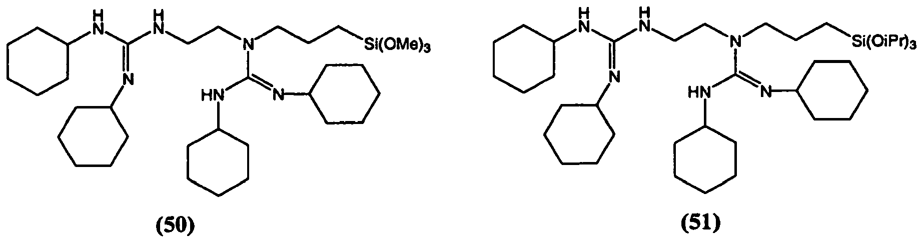

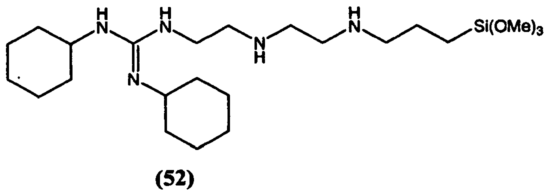

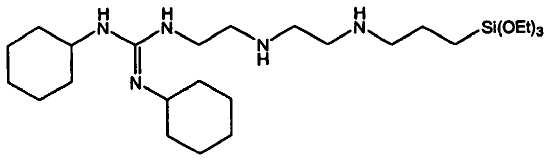

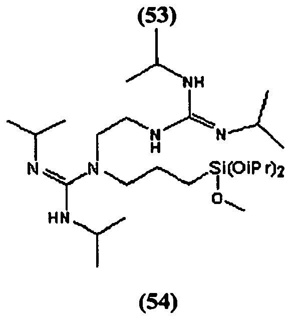

5. Procédé pour la préparation d'un composé répondant à la formule **(I)** selon l'une quelconque des revendications 1 à 4, **caractérisé en ce qu'**il comprend la réaction d'un carbodiimide de formule **(II)** 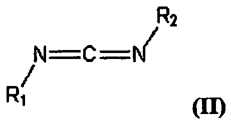 avec une amine primaire ou secondaire de formule **(III)** 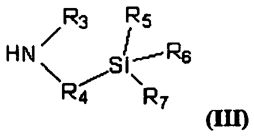 où R₁, R₂, R₃, R₄, R₅, R₆ et R₇ sont tels que définis ci-dessus.

6. Procédé selon la revendication 5, **caractérisé en ce que** la réaction du carbodiimide de formule (II) avec l'amine de formule **(III)** est réalisée sans solvant.

7. Sel de guanidinium **(IV)** préparé en faisant réagir un composé tel que défini selon la revendication 4 ou selon la formule **(I)** telle que défini selon la revendication 1, avec un acide carboxylique.

8. Composition organopolysiloxanique, **caractérisée en ce qu'**elle comprend d'une part une base silicone **B** apte à durcir par réaction de polycondensation en un élastomère silicone et d'autre part, une quantité catalytiquement efficace d'au moins un catalyseur de polycondensation qui est soit un sel de guanidinium **(IV)** tel que défini selon la revendication 7 soit une guanidine de formule **(I)** suivante: 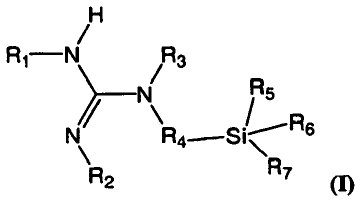 dans laquelle,
- R₁ et R₂, identiques ou différents, représentent, indépendamment l'un de l'autre, un groupe alkyle monovalent linéaire ou ramifié, un groupe cycloalkyle, un groupe (cycloalkyl)alkyle, le cycle étant substitué ou non et pouvant comprendre au moins un hétéroatome, un groupe arylalkyle, fluoroalkyle, aryle substitué ou non, R₁₁R₁₂R₁₃Si, où R_{11,} R_{12,} et R₁₃ sont des groupes alkyles monovalents linéaires ou ramifiés,
- R₃ représente un atome d'hydrogène, un groupe alkyle monovalent linéaire ou ramifié, un groupe cycloalkyle, un groupe alkyle substitué par un cycle, substitué ou non et pouvant comprendre au moins un hétéroatome, un groupe arylalkyle, fluoroalkyle, alkylamine, alkylguanidine, aryle substitué ou non, un alkylalcoxysilane,
- R₄ représente une chaîne alkyle linéaire ou ramifiée contenant 1 à 50 atomes, de préférence de 1 à 20 atomes, certains pouvant être des hétéroatomes choisis parmi O, S et N,
- R₅, R₆ et R₇, identiques ou différents, représentent, indépendamment l'un de l'autre, un groupe alkyle linéaire ou ramifié, un groupe aromatique, un groupe alcoxy ou un groupe trialkylsilyloxy de formule **(I')** suivante: 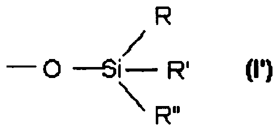
- R, R' et R", identiques ou différents, représentent, indépendamment l'un de l'autre, un groupe alkyle linéaire ou ramifié en C₁-C₁₂, ou un groupe aromatique,
à condition que si R₃ est un atome d'hydrogène, alors R₁ et R₂ ne sont ni l'un ni l'autre un groupe hydrocarboné monovalent linéaire.

9. Composition selon la revendication 8, **caractérisée en ce que** le catalyseur de polycondensation est choisi parmi les composés **(1)** à **(54)** tels que définis selon la revendication 4.

10. Composition selon l'une quelconque des revendication 8 à 9, **caractérisée en ce que** la quantité de composé de formule **(I)** est comprise entre 0,1% et 10 % en poids de la masse totale, de préférence entre 0,5% et 5 % en poids.

11. Composition selon l'une quelconque des revendications 8 à 10, **caractérisée en ce que** la base silicone **B** comprend:
- au moins une huile polyorganosiloxane **C** susceptible de réticuler par polycondensation en un élastomère;
- éventuellement au moins un agent de réticulation **D**;
- éventuellement au moins un promoteur d'adhérence **E**; et
- éventuellement au moins une charge minérale siliceuse, organique et/ou non siliceuse **F**.

12. Elastomère obtenu par réticulation et durcissement de la composition selon l'une quelconque des revendications 8 à 11.

13. Utilisation comme catalyseur de la réaction de polycondensation d'organopolysiloxanes d'un sel de guanidinium **(IV)** tel que défini selon la revendication 7 ou d'un composé de formule **(I)**: 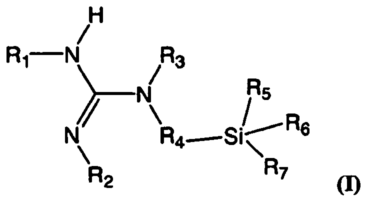 dans laquelle,
- R₁ et R₂, identiques ou différents, représentent, indépendamment l'un de l'autre, un groupe alkyle monovalent linéaire ou ramifié, un groupe cycloalkyle, un groupe (cycloalkyl)alkyle, le cycle étant substitué ou non et pouvant comprendre au moins un hétéroatome, un groupe arylalkyle, fluoroalkyle, aryle substitué ou non, R₁₁R₁₂R₁₃Si, où R_{11,} R_{12,} et R₁₃ sont des groupes alkyles monovalents linéaires ou ramifiés,
- R₃ représente un atome d'hydrogène, un groupe alkyle monovalent linéaire ou ramifié, un groupe cycloalkyle, un groupe alkyle substitué par un cycle, substitué ou non et pouvant comprendre au moins un hétéroatome , un groupe arylalkyle, fluoroalkyle, alkylamine, alkylguanidine, aryle substitué ou non, un alkylalcoxysilane,
- R₄ représente une chaîne alkyle linéaire ou ramifiée contenant 1 à 50 atomes, de préférence de 1 à 20, certains pouvant être des hétéroatomes choisis parmi O, S et N,
- R₅, R₆ et R₇, identiques ou différents, représentent, indépendamment l'un de l'autre, un groupe alkyle linéaire ou ramifié, un groupe aromatique, un groupe alcoxy, ou un groupe trialkylsilyloxy de formule **(I')** suivante: 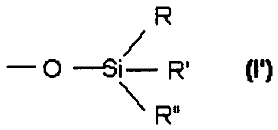
- R, R' et R", identiques ou différents, représentent, indépendamment l'un de l'autre, un groupe alkyle linéaire ou ramifié en C₁-C₁₂, ou un groupe aromatique, et
avec la condition que si R₃ est un atome d'hydrogène" alors R₁ et R₂ ne sont ni l'un ni l'autre un groupe hydrocarboné monovalent linéaire.

## Patentansprüche

1. Verbindung der allgemeinen Formel (I): 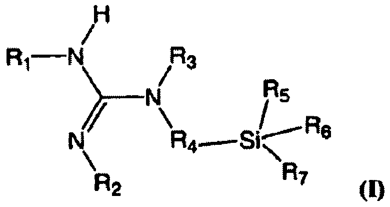 worin
- R₁ und R₂ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom enthalten kann, eine Arylalkylgruppe, eine Fluoralkylgruppe, eine gegebenenfalls substituierte Arylgruppe oder eine R₁₁R₁₂R₁₃Si-Gruppe, wobei R₁₁, R₁₂, and R₁₃ lineare oder verzweigte einwertige Alkylgruppen sind, stehen,
- R₃ für ein Wasserstoffatom, eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine Arylalkylgruppe, eine Fluoralkylgruppe, eine Alkylamingruppe, eine Alkylguanidingruppe, eine gegebenenfalls substituierte Arylgruppe oder eine Alkylalkoxysilangruppe steht;
- R₄ für eine lineare oder verzweigte Alkylkette mit 1 bis 50 Atomen, vorzugsweise 1 bis 20 Atomen, von denen einige aus 0, S und N ausgewählte Heteroatome sein können, steht,
- R₅, R₆ und R₇ gleich oder verschieden sind und unabhängig voneinander für eine lineare oder verzweigte Alkylgruppe, eine aromatische Gruppe, eine Alkoxygruppe oder eine Trialkylsilyloxygruppe der folgenden Formel **(I')** stehen: 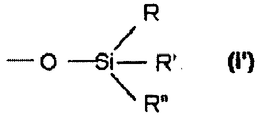
- R, R' und R" gleich oder verschieden sind und unabhängig voneinander für eine lineare oder verzweigte C₁-C₁₂-Alkylgruppe oder eine aromatische Gruppe stehen, und
mit der Maßgabe, dass:
- dann, wenn R₃ für ein Wasserstoffatom steht, weder R₁ noch R₂ für eine lineare einwertige Kohlenwasserstoffgruppe steht;
- dann, wenn R₁ und R₂ jeweils für eine Cyclohexylgruppe stehen, R₄ für eine lineare Propylengruppe steht und R₅ = R₆ = R₇ = OEt, R₃ nicht für ein Wasserstoffatom steht; und
- dann, wenn R₁ und R₂ jeweils für eine Cyclohexylgruppe stehen, R₄ für eine lineare Propylengruppe steht und R₅ = R₆ = R₇ = OEt, R₃ nicht für die Gruppe 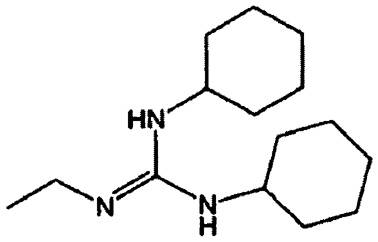 steht.

2. Verbindung nach Anspruch 1, **dadurch gekennzeichnet, dass** R₁ und R₂ jeweils für eine Isopropylgruppe oder eine Cyclohexylgruppe stehen.

3. Verbindung nach einem der vorhergehenden Ansprüche, **dadurch gekennzeichnet, dass** R₃ für ein Wasserstoffatom, eine Methylgruppe, eine Ethylgruppe, eine Propylgruppe, eine Butylgruppe oder eine Propyltrialkoxysilangruppe steht.

4. Verbindung nach einem der vorhergehenden Ansprüche, **dadurch gekennzeichnet, dass** sie aus den folgenden Verbindungen **(1)** bis **(54)** ausgewählt ist:

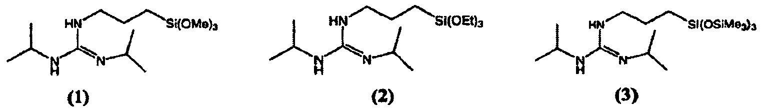

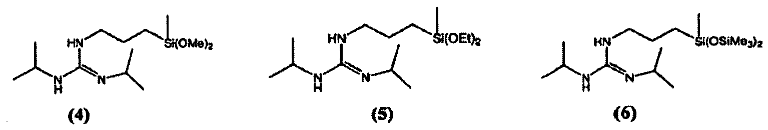

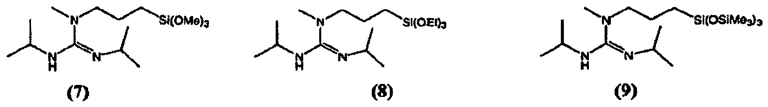

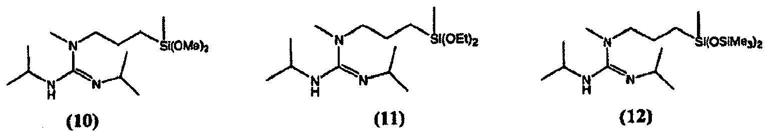

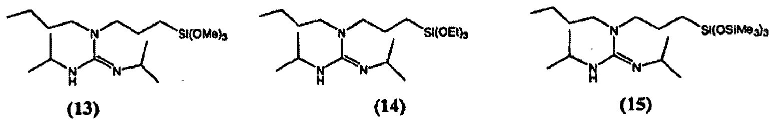

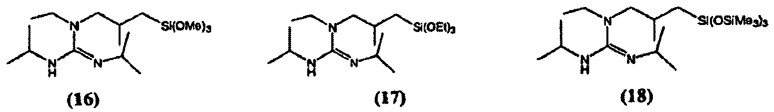

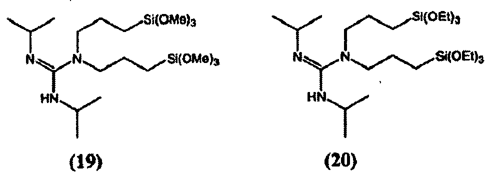

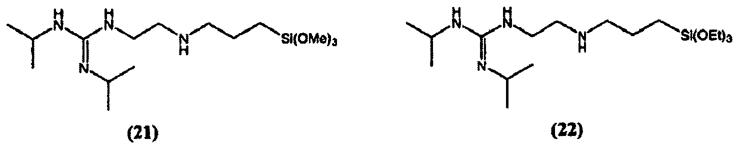

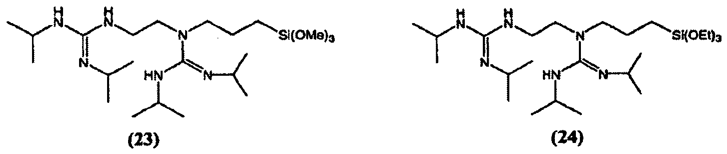

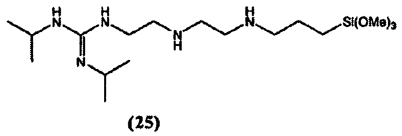

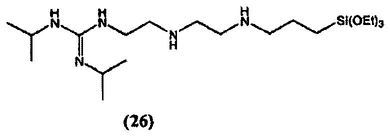

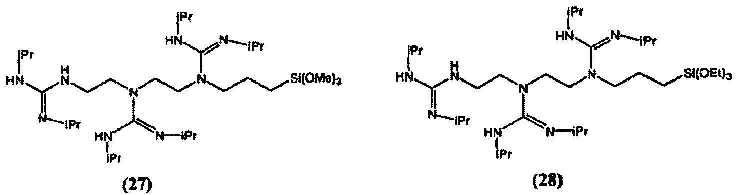

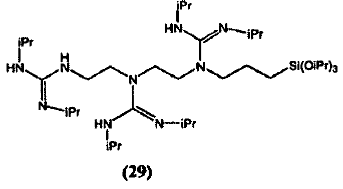

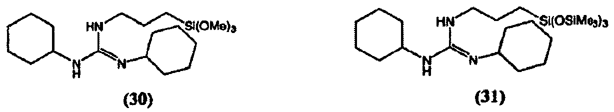

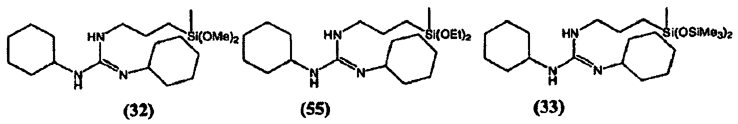

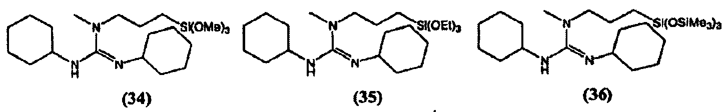

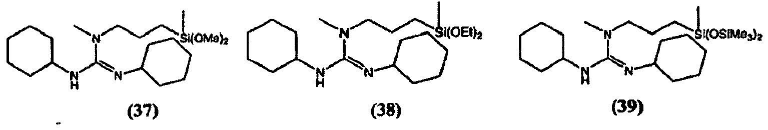

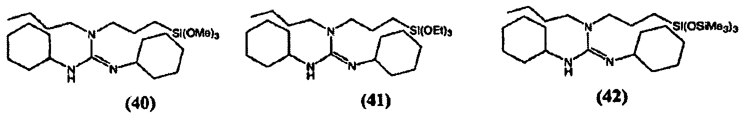

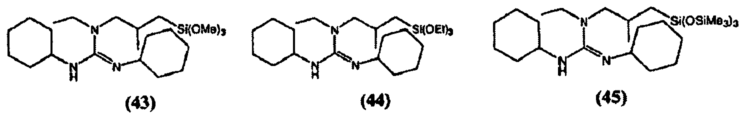

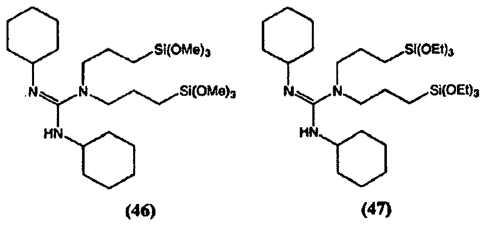

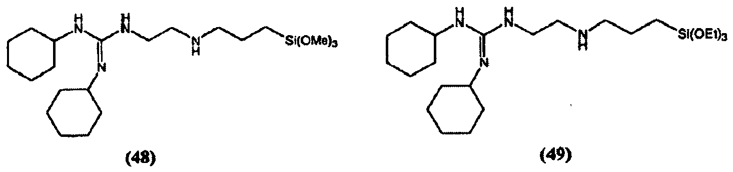

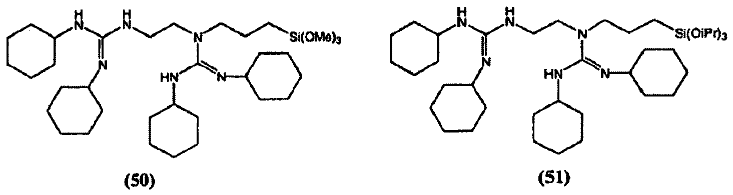

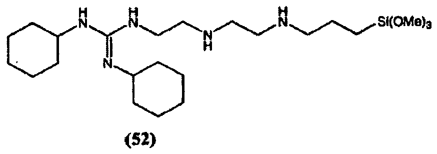

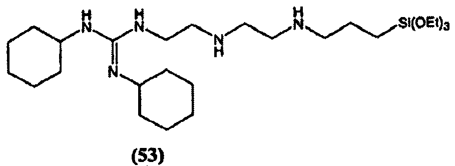

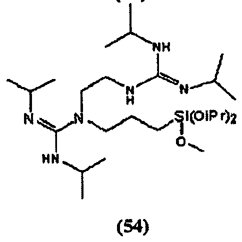

5. Verfahren zur Herstellung einer Verbindung der Formel **(I)** nach einem der Ansprüche 1 bis 4, **dadurch gekennzeichnet, dass** man ein Carbodiimid der Formel **(II)** 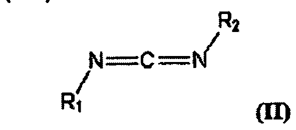 mit einem primären oder sekundären Amin der Formel **(III)** 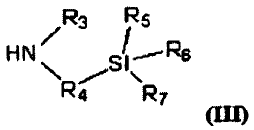 umsetzt, wobei R₁, R₂, R₃, R₄, R₅, R₆ und R₇ die oben angegebene Bedeutung besitzen.

6. Verfahren nach Anspruch 5, **dadurch gekennzeichnet, dass** man die Umsetzung des Carbodiimids der Formel **(II)** mit dem Amin der Formel **(III)** ohne Lösungsmittel durchführt.

7. Guanidiniumsalz **(IV)**, hergestellt durch Umsetzung einer Verbindung gemäß Anspruch 4 oder der Formel **(I)** gemäß Anspruch 1 mit einer Carbonsäure.

8. Organopolysiloxanzusammensetzung, **dadurch gekennzeichnet, dass** sie einerseits eine Silikonbasis **B**, die durch Polykondensationsreaktion zu einem Silikonelastomer gehärtet werden kann, und andererseits eine katalytisch wirksame Menge mindestens eines Polykondensationskatalysators, bei dem es sich entweder um ein Guanidiniumsalz gemäß Anspruch 7 order um ein Guanidin der folgenden Formel **(I)** handelt: 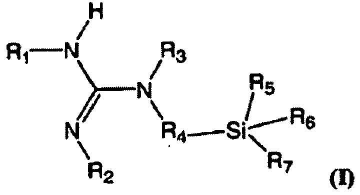 worin
- R₁ und R₂ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom enthalten kann, eine Arylalkylgruppe, eine Fluoralkylgruppe, eine gegebenenfalls substituierte Arylgruppe oder eine R₁₁R₁₂R₁₃Si-Gruppe, wobei R₁₁, R₁₂, and R₁₃ lineare oder verzweigte einwertige Alkylgruppen sind, stehen,
- R₃ für ein Wasserstoffatom, eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine Arylalkylgruppe, eine Fluoralkylgruppe, eine Alkylamingruppe, eine Alkylguanidingruppe, eine gegebenenfalls substituierte Arylgruppe oder eine Alkylalkoxysilangruppe steht;
- R₄ für eine lineare oder verzweigte Alkylkette mit 1 bis 50 Atomen, vorzugsweise 1 bis 20 Atomen, von denen einige aus 0, S und N ausgewählte Heteroatome sein können, steht,
- R₅, R₆ und R₇ gleich oder verschieden sind und unabhängig voneinander für eine lineare oder verzweigte Alkylgruppe, eine aromatische Gruppe, eine Alkoxygruppe oder eine Trialkylsilyloxygruppe der folgenden Formel (I') stehen: 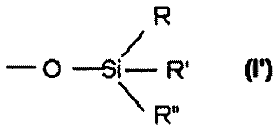
- R, R' und R'' gleich oder verschieden sind und unabhängig voneinander für eine lineare oder verzweigte C₁-C₁₂-Alkylgruppe oder eine aromatische Gruppe stehen, und
mit der Maßgabe, dass dann, wenn R₃ für ein Wasserstoffatom steht, weder R₁ noch R₂ für eine lineare einwertige Kohlenwasserstoffgruppe steht; umfasst.

9. Zusammensetung nach Anspruch 8, **dadurch gekennzeichnet, dass** der Polykondensationskatalysator aus den Verbindungen **(1)** bis **(54)** gemäß Anspruch 4 ausgewählt ist.

10. Zusammensetzung nach einem der Ansprüche 8 bis 9, **dadurch gekennzeichnet, dass** die Menge an Verbindung der Formel **(I)** zwischen 0,1 und 10 Gew.-%, bezogen auf die Gesamtmasse, und vorzugsweise zwischen 0,5 und 5 Gew.-% liegt.

11. Zusammensetzung nach einem der Ansprüche 8 bis 10, **dadurch gekennzeichnet, dass** die Silikonbasis **B**:
- mindestens ein Polyorganosiloxanöl **C**, das durch Polykondensation zu einem Elastomer vernetzt werden kann;
- gegebenenfalls mindestens ein Vernetzungsmittel **D**;
- gegebenenfalls mindestens einen Haftvermittler **E** und
- gegebenenfalls mindestens einen siliciumhaltigen, organischen und/oder nicht siliciumhaltigen mineralischen Füllstoff **F**
umfasst.

12. Elastomer, erhalten durch Vernetzung und Härtung der Zusammensetzung nach einem der Ansprüche 8 bis 11.

13. Verwendung eines Guanidiniumsalzes **(IV)** gemäß Anspruch 7 oder einer Verbindung der Formel **(I)**: 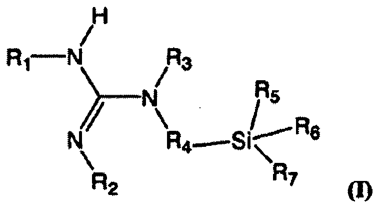 worin
- R₁ und R₂ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom enthalten kann, eine Arylalkylgruppe, eine Fluoralkylgruppe, eine gegebenenfalls substituierte Arylgruppe oder eine R₁₁R₁₂R₁₃Si-Gruppe, wobei R₁₁, R₁₂, and R₁₃ lineare oder verzweigte einwertige Alkylgruppen sind, stehen,
- R₃ für ein Wasserstoffatom, eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine Arylalkylgruppe, eine Fluoralkylgruppe, eine Alkylamingruppe, eine Alkylguanidingruppe, eine gegebenenfalls substituierte Arylgruppe oder eine Alkylalkoxysilangruppe steht;
- R₄ für eine lineare oder verzweigte Alkylkette mit 1 bis 50 Atomen, vorzugsweise 1 bis 20 Atomen, von denen einige aus O, S und N ausgewählte Heteroatome sein können, steht,
- R₅, R₆ und R₇ gleich oder verschieden sind und unabhängig voneinander für eine lineare oder verzweigte Alkylgruppe, eine aromatische Gruppe, eine Alkoxygruppe oder eine Trialkylsilyloxygruppe der folgenden Formel **(I')** stehen: 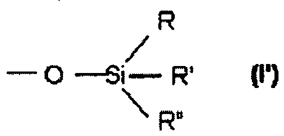
- R, R' und R'' gleich oder verschieden sind und unabhängig voneinander für eine lineare oder verzweigte C₁-C₁₂-Alkylgruppe oder eine aromatische Gruppe stehen, und
mit der Maßgabe, dass dann, wenn R₃ für ein Wasserstoffatom steht, weder R₁ noch R₂ für eine lineare einwertige Kohlenwasserstoffgruppe steht; als Katalysator für die Polykondensationsreaktion von Organopolysiloxanen.

## Claims

1. Compound corresponding to the general formula **(I)**: 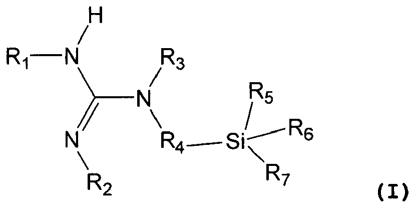 in which:
- R₁ and R₂, which are identical or different, represent, independently of one another, a linear or branched monovalent alkyl group, a cycloalkyl group, a (cycloalkyl)alkyl group, the ring being substituted or unsubstituted and possibly comprising at least one heteroatom, an arylalkyl, fluoroalkyl, substituted or unsubstituted aryl or R₁₁R₁₂R₁₃Si group, where R₁₁, R₁₂, and R₁₃ are linear or branched monovalent alkyl groups;
- R₃ represents a hydrogen atom, a linear or branched monovalent alkyl group, a cycloalkyl group, an alkyl group substituted by a ring that is substituted or unsubstituted and that possibly comprises at least one heteroatom, an arylalkyl, fluoroalkyl, alkylamine, alkylguanidine or substituted or unsubstituted aryl group or an alkylalkoxysilane;
- R₄ represents a linear or branched alkyl chain containing 1 to 50 atoms, preferably 1 to 20 atoms, some of them possibly being heteroatoms chosen from O, S and N;
- R₅, R₆ and R₇, which are identical or different, represent, independently of one another, a linear or branched alkyl group, an aromatic group, an alkoxy group or a trialkylsilyloxy group of formula **(I')** below: 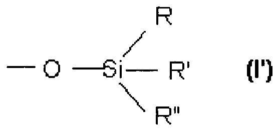
- R, R' and R", which are identical or different, represent, independently of one another, a linear or branched C₁-C₁₂ alkyl group or an aromatic group; and
on condition that:
- if R₃ is a hydrogen atom, then R₁ and R₂ are not, either of them, a linear monovalent hydrocarbon-based group;
- if R₁ and R₂ are each a cyclohexyl group, R₄ a linear propylene group and R₅ = R₆ = R₇ = OEt, then R₃ is not a hydrogen atom; and
- if R₁ and R₂ are each a cyclohexyl group, R₄ a linear propylene group and R₅ = R₆ = R₇ = OEt, then R₃ is not the group

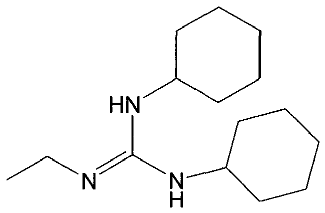

2. Compound according to Claim 1, **characterized in that** R₁ and R₂ are each an isopropyl or a cyclohexyl group.

3. Compound according to either one of the preceding claims, **characterized in that** R₃ is a hydrogen atom, a methyl group, an ethyl group, a propyl group, a butyl group, or a propyltrialkoxysilane group.

4. Compound according to any one of the preceding claims, **characterized in that** it is chosen from the compounds **(1)** to **(54)** below:

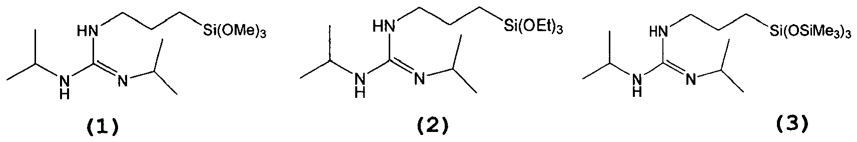

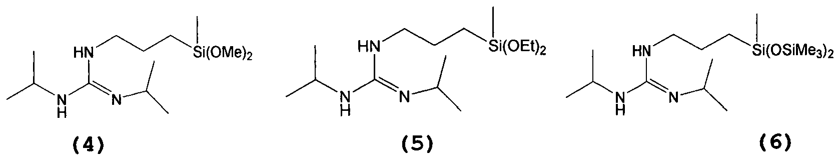

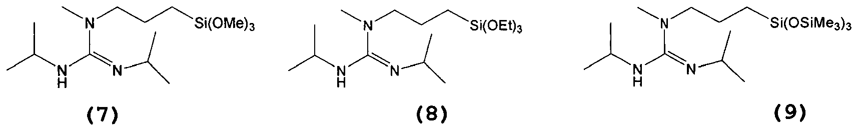

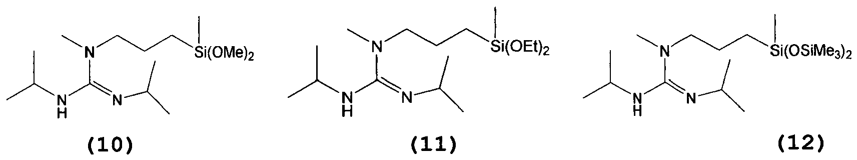

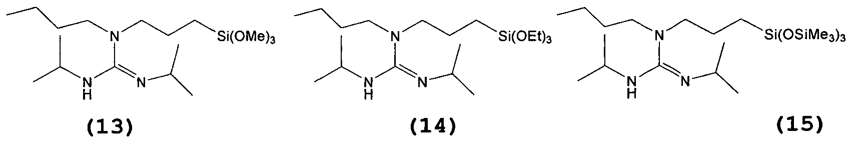

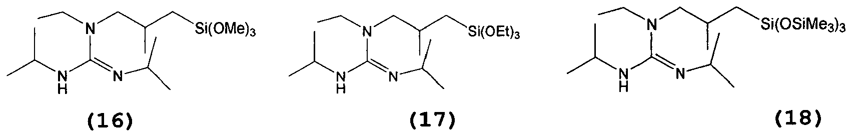

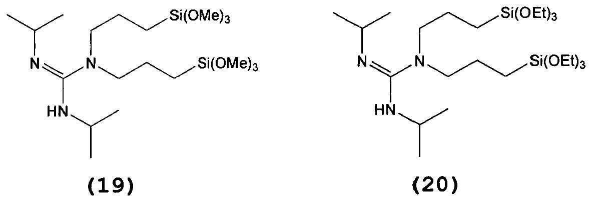

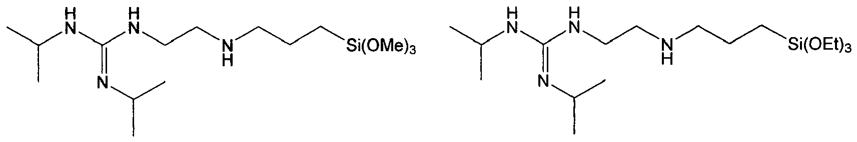

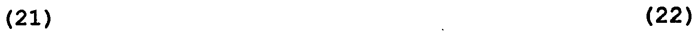

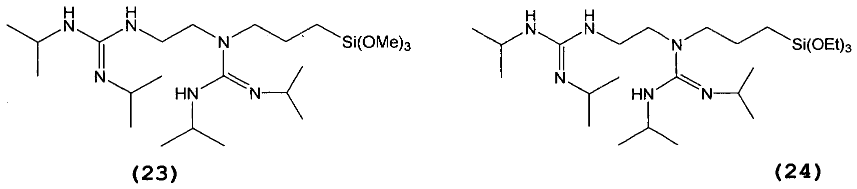

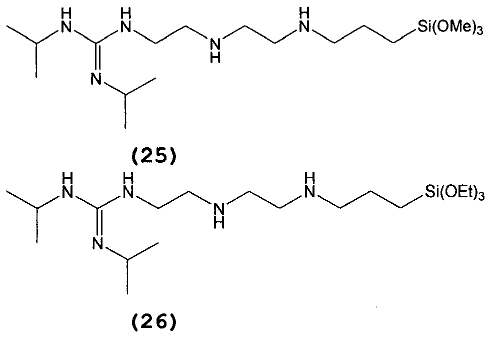

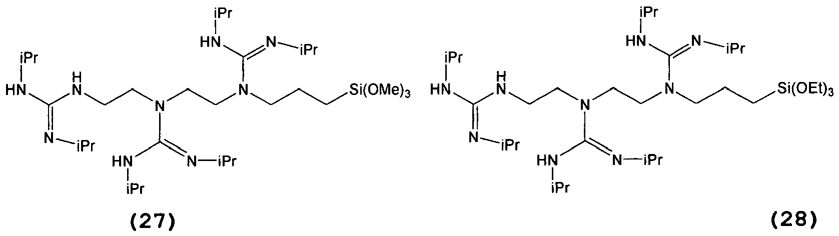

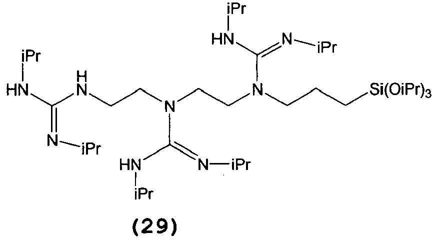

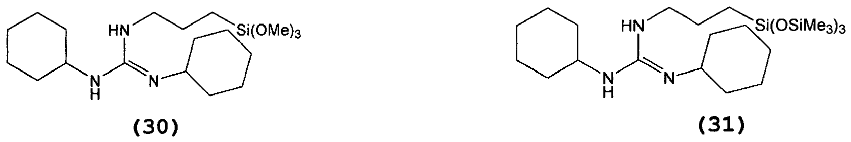

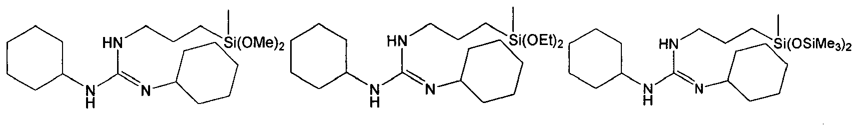

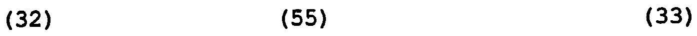

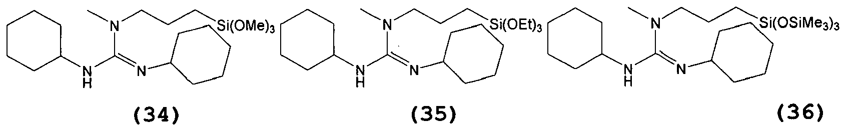

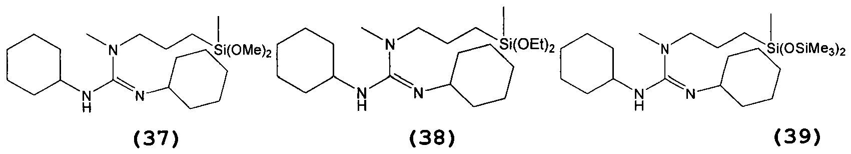

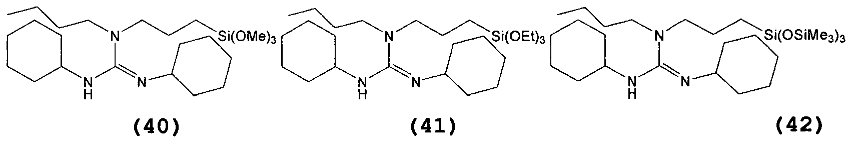

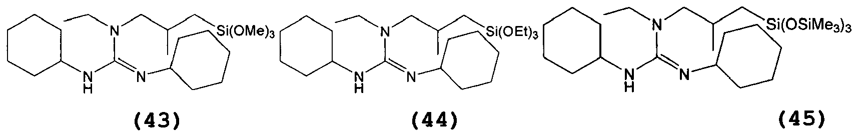

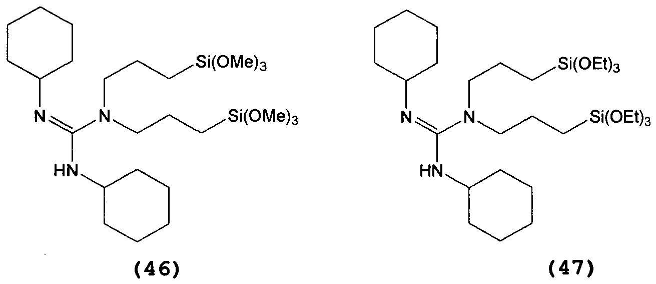

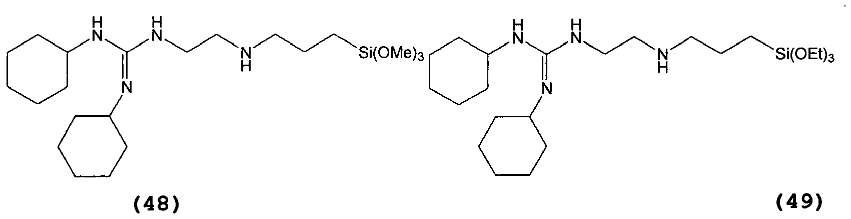

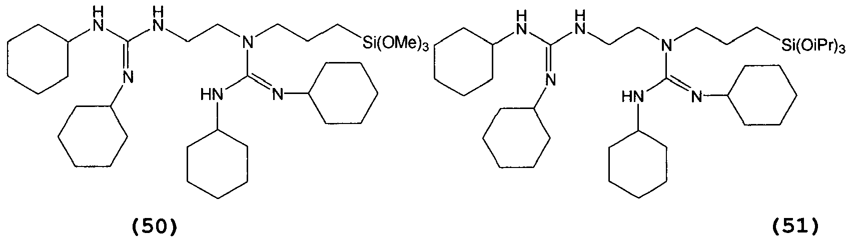

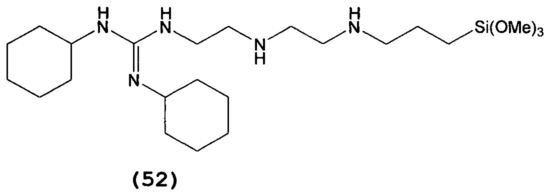

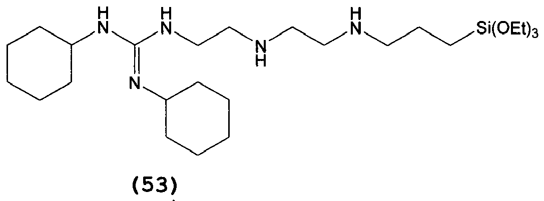

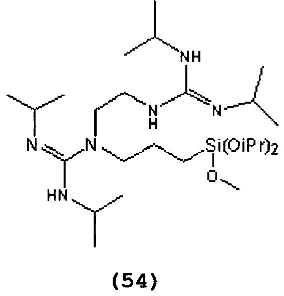

5. Process for preparing a compound corresponding to the formula **(I)** according to any one of Claims 1 to 4, **characterized in that** it comprises the reaction of a carbodiimide of formula **(II)**: 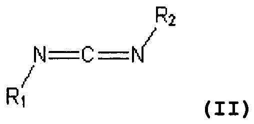 with a primary or secondary amine of formula **(III)**: 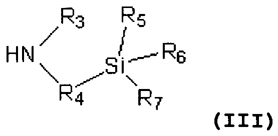 where R₁, R₂, R₃, R₄, R₅, R₆ and R₇ are as defined above.

6. Process according to Claim 5, **characterized in that** the reaction of the carbodiimide of formula **(II)** with the amine of formula **(III)** is carried out without solvent.

7. Guanidinium salt **(IV)** prepared by reacting a compound as defined according to Claim 4 or according to formula **(I)** as defined according to Claim 1, with a carboxylic acid.

8. Organopolysiloxane composition, **characterized in that** it comprises, on the one hand, a silicone base **B** capable of curing via polycondensation reaction into a silicone elastomer and, on the other hand, a catalytically effective amount of at least one polycondensation catalyst which is either a guanidinium salt **(IV)** as defined according to Claim 7 or a guanidine of formula **(I)** below: 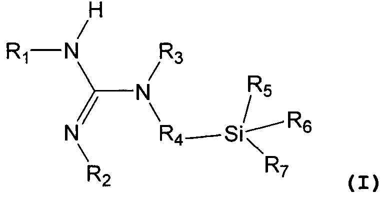 in which:
- R₁ and R₂, which are identical or different, represent, independently of one another, a linear or branched monovalent alkyl group, a cycloalkyl group, a (cycloalkyl)alkyl group, the ring being substituted or unsubstituted and possibly comprising at least one heteroatom, an arylalkyl, fluoroalkyl, substituted or unsubstituted aryl or R₁₁R₁₂R₁₃Si group, where R_{11,} R_{12,} and R₁₃ are linear or branched monovalent alkyl groups;
- R₃ represents a hydrogen atom, a linear or branched monovalent alkyl group, a cycloalkyl group, an alkyl group substituted by a ring that is substituted or unsubstituted and that possibly comprises at least one heteroatom, an arylalkyl, fluoroalkyl, alkylamine, alkylguanidine or substituted or unsubstituted aryl group or an alkylalkoxysilane;
- R₄ represents a linear or branched alkyl chain containing 1 to 50 atoms, preferably 1 to 20 atoms, some of them possibly being heteroatoms chosen from 0, S and N;
- R₅, R₆ et R₇, which are identical or different, represent, independently of one another, a linear or branched alkyl group, an aromatic group, an alkoxy group or a trialkylsilyloxy group of formula **(I')** below: 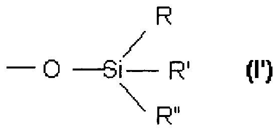
- R, R' and R", which are identical or different, represent, independently of one another, a linear or branched C₁-C₁₂ alkyl group or an aromatic group;
on condition that if R₃ is a hydrogen atom, then R₁ and R₂ are not, either of them, a linear monovalent hydrocarbon-based group.

9. Composition according to Claim 8, **characterized in that** the polycondensation catalyst is chosen from the compounds **(1)** to **(54)** as defined according to Claim 4.

10. Composition according to either one of Claims 8 and 9, **characterized in that** the amount of compound of formula **(I)** is between 0.1% and 10% by weight of the total weight preferably between 0.5% and 5% by weight.

11. Composition according to any one of Claims 8 to 10, **characterized in that** the silicone base **B** comprises:
- at least one polyorganosiloxane oil **C** capable of crosslinking via polycondensation into an elastomer;
- optionally at least one crosslinking agent **D**;
- optionally at least one adhesion promoter **E**; and
- optionally at least one siliceous, organic and/or non-siliceous mineral filler **F**.

12. Elastomer obtained by crosslinking and curing the composition according to any one of Claims 8 to 11.

13. Use, as catalyst for the polycondensation reaction of organopolysiloxanes, of a guanidinium salt **(IV)** as defined according to Claim 7 or of a compound of formula **(I)**: 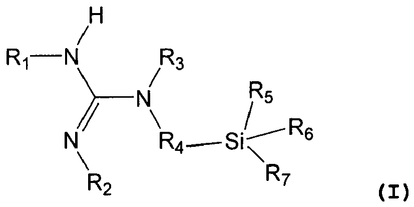 in which:
- R₁ and R₂, which are identical or different, represent, independently of one another, a linear or branched monovalent alkyl group, a cycloalkyl group, a (cycloalkyl)alkyl group, the ring being substituted or unsubstituted and possibly comprising at least one heteroatom, an arylalkyl, fluoroalkyl, substituted or unsubstituted aryl or R₁₁R₁₂R₁₃Si group, where R_{11,} R_{12,} and R₁₃ are linear or branched monovalent alkyl groups;
- R₃ represents a hydrogen atom, a linear or branched monovalent alkyl group, a cycloalkyl group, an alkyl group substituted by a ring that is substituted or unsubstituted and that possibly comprises at least one heteroatom, an arylalkyl, fluoroalkyl, alkylamine, alkylguanidine or substituted or unsubstituted aryl group or an alkylalkoxysilane;
- R₄ represents a linear or branched alkyl chain containing 1 to 50 atoms, preferably 1 to 20 atoms, some of them possibly being heteroatoms chosen from O, S and N;
- R₅, R₆ and R₇, which are identical or different, represent, independently of one another, a linear or branched alkyl group, an aromatic group, an alkoxy group or a trialkylsilyloxy group of formula **(I')** below: 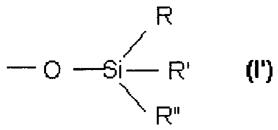
- R, R' and R", which are identical or different, represent, independently of one another, a linear or branched C₁-C₁₂ alkyl group or an aromatic group; and
on condition that if R₃ is a hydrogen atom, then R₁ and R₂ are not, either of them, a linear monovalent hydrocarbon-based group.
